# EUROPEAN PATENT SPECIFICATION

(11) **EP 4 510 603 B1**
(45) Date of publication and mention of the grant of the patent: **26.08.2026**
(21) Application number: 23923789.4
(22) Date of filing: 23.11.2023
(51) Int. Cl.: H04N 23/611, H04N 23/60

(54) **IMAGE CAPTURING METHOD AND ELECTRONIC DEVICE**
BILDERFASSUNGSVERFAHREN UND ELEKTRONISCHE VORRICHTUNG
PROCÉDÉ DE CAPTURE D'IMAGE ET DISPOSITIF ÉLECTRONIQUE

(30) Priority: 23.02.2023 CN 202310206533
(43) Date of publication of application: 19.02.2025
(73) Proprietor: Honor Device Co., Ltd., Shenzhen, Guangdong 518040 (CN)
(72) Inventor: LI, Ziyi, Shenzhen, Guangdong 518040 (CN); DU, Yuanchao, Shenzhen, Guangdong 518040 (CN); WANG, Wenbo, Shenzhen, Guangdong 518040 (CN); ZHU, Shiyu, Shenzhen, Guangdong 518040 (CN)
(74) Representative: Beder, Jens
(86) International application number: PCT/CN2023/133794
(87) International publication number: WO 2024/174626

(56) References cited:
- EP-A1- 1 128 316
- CN-A- 107 025 437
- CN-A- 109 196 852
- CN-A- 111 160 201
- CN-A- 111 432 114
- CN-A- 111 432 114
- JP-A- 2004 247 869
- US-B1- 8 508 622

## Description

This application claims priority to Chinese Patent Application No. 202310206533.4, filed with the China National Intellectual Property Administration on February 23, 2023 and entitled "IMAGE CAPTURE METHOD AND ELECTRONIC DEVICE".

### TECHNICAL FIELD

Embodiments of this application relate to the field of images technologies, and in particular, to an image capture method and an electronic device.

### BACKGROUND

With the rapid development of electronic technologies, camera pixels of electronic devices such as mobile phones and tablets are getting higher, and more users use the electronic devices such as mobile phones and tablets to take photos. To meet photographing requirements of users, major device manufacturers continuously upgrade hardware of electronic devices to improve image quality and definition of captured pictures. However, user requirements for photographing are not limited to image quality and definition, but also include a requirement for picture aesthetics such as picture composition.

In consideration of a case in which most users do not have professional photography skills and may not be able to perform proper composition, basic composition schemes can be used in related technologies to guide the users in photographing. For example, face detection or human body detection may be performed on a person in a picture to obtain a face position or a human body position; and when the face position or the human body position conforms to a predefined photography template, a photographing operation is triggered. However, distribution of person weight in the picture is not taken into consideration in this method; and when there are a plurality of persons in the picture, a position relationship between the plurality of persons is not taken into consideration, both of which are likely to cause picture imbalance.

The document CN 111432114 A shows a scoring method for scoring image quality based upon composition metrices.

### SUMMARY

The present invention is defined by the independent claims. Further advantageous developments are shown by the dependent claims.

Embodiments of this application provide an image capture method and electronic device for filtering a plurality of frames of images to obtain an image with high composition quality.

To achieve the above objectives, embodiments of this application use the following technical solutions:
According to a first aspect, an image capture method is provided in claim 1.

It can be understood that, according to this application, composition quality of an image is evaluated by quantifying a matching degree between the image and a preset composition rule, a closeness degree between at least two target persons in the image, and a dispersion degree of position arrangement between at least three target persons in the image, namely, three quantization parameters (that is, the distance parameter, the closeness parameter, and the compactness parameter), and one or more frames of images with highest composition quality are stored, so that rigidity of a photography template can be avoided, users are provided with free space to express themselves, and the users are assisted in obtaining high-quality images.

In the invention the composition indicator includes the distance parameter, and when the person quantity N is greater than or equal to 2, the person information includes center of mass positions of the N target persons and area proportions of the N target persons; and the determining a composition indicator of each frame of image based on person information in the corresponding image: for each of the N target persons, obtaining a corresponding basic distance parameter based on a distance from a center of mass position of the target person to a preset reference position; and performing weighted averaging on basic distance parameters corresponding to all target persons by using area proportions of the target persons as weights, to obtain the distance parameter. It can be understood that, when there are a plurality of target persons, weighted averaging is performed by using area proportions of different target persons as weights, to effectively evaluate whether the plurality of target persons are close to a reference position. When the distance from the target person to the reference position is closer, the composition quality of the image is higher.

In one implementation according to the first aspect, when the person quantity N is equal to 1, the person information includes a center of mass position of each target person; and the determining a composition indicator of each frame of image based on person information in the corresponding image includes: obtaining a corresponding basic distance parameter based on a distance from a center of mass position of the target person to a preset reference position; and determining the basic distance parameter as the distance parameter.

In one implementation according to the first aspect, the preset reference position includes a plurality of reference positions; and the obtaining a corresponding basic distance parameter based on a distance from a center of mass position of the target person to a preset reference position includes: using a smallest distance among distances from the center of mass position of the target person to the plurality of reference positions as the corresponding basic distance parameter; or the preset reference position includes one reference position; and the obtaining a corresponding basic distance parameter based on a distance from a center of mass position of the target person to a preset reference position includes: using a distance from the center of mass position target person to the one reference position as the corresponding basic distance parameter.

In one implementation according to the first aspect, the preset reference position includes: four points of interest of the image, two diagonal lines of the image, four trisection lines of the image, or a center point of the image. Specifically, preset reference positions of a first composition rule (golden triangle composition rule) are the four points of interest of the image, preset reference positions of a second composition rule (composition rule of thirds) are the four trisection lines of the image, preset reference positions of a third composition rule (diagonal composition rule) are the two diagonal lines of the image, and a preset reference position of a fourth composition rule (center composition rule) is the center point of the image.

In one implementation according to the first aspect, when the person quantity N is greater than or equal to 2, the composition indicator includes the closeness parameter, the person information includes face positions of the N target persons, and the determining a composition indicator of each frame of image based on person information in the corresponding image includes: constructing a binary tree structure with N face positions as nodes and a line connecting any two face positions as an edge, where a weight of each edge is a distance between the two face positions corresponding to the edge; constructing a minimum spanning tree of the binary tree structure, where the minimum spanning tree includes N-1 edges; and determining an average value of weights of the N-1 edges as the closeness parameter.

In one implementation according to the first aspect, when the person quantity N is greater than or equal to 3, the composition indicator further includes the compactness parameter, the person information further includes center of mass positions of the N target persons, and the determining a composition indicator of each frame of image based on person information in the corresponding image further includes: separately determining a standard deviation of the N center of mass positions in a first direction and a standard deviation of the N center of mass positions in a second direction; and determining a smaller value in the standard deviation in the first direction and the standard deviation in the second direction as the compactness parameter.

In one implementation according to the first aspect, the method further includes: comparing composition indicators of any two frames of images in the plurality of frames of images, and removing a frame of image with lower composition quality in the two frames of images; and continuing comparing composition indicators of any two frames of images in a plurality of frames of images left after removing the frame of image with lower composition quality, until all the plurality of frames of images complete being compared.

In one implementation according to the first aspect, when person quantities in the any two frames of images are both 1, the composition indicator includes the distance parameter, the distance parameter includes a first distance parameter, a second distance parameter, a third distance parameter, and a fourth distance parameter, the first distance parameter indicates a matching degree between the image and the first composition rule, the second distance parameter indicates a matching degree between the image and the second composition rule, the third distance parameter indicates a matching degree between the image and the third composition rule, the fourth distance parameter indicates a matching degree between the image and the fourth composition rule, and the first composition rule, the second composition rule, the third composition rule, and the fourth composition rule include different reference positions. The comparing composition indicators of any two frames of images in the plurality of frames of images includes: when a difference between first distance parameters of the any two frames of images is greater than or equal to a first threshold, comparing the first distance parameters of the any two frames of images, where an image with a smaller first distance parameter has a higher composition quality; or when a difference between first distance parameters of the any two frames of images is less than a first threshold, determining whether a difference between second distance parameters of the any two frames of images is greater than or equal to a second threshold; and when the difference between the second distance parameters of the any two frames of images is greater than or equal to the second threshold, comparing the second distance parameters of the any two frames of images, where an image with a smaller second distance parameter has a higher composition quality; or when the difference between the second distance parameters of the any two frames of images is less than the second threshold, determining whether a difference between third distance parameters of the any two frames of images is greater than or equal to a third threshold; and when the difference between the third distance parameters of the any two frames of images is greater than or equal to the third threshold, comparing the third distance parameters of the any two frames of images, where an image with a smaller third distance parameter has a higher composition quality; or when the difference between the third distance parameters of the any two frames of images is less than the third threshold, determining whether a difference between fourth distance parameters of the any two frames of images is greater than or equal to a fourth threshold; and when the difference between the fourth distance parameters of the any two frames of images is greater than or equal to the fourth threshold, comparing the fourth distance parameters of the any two frames of images, where an image with a smaller fourth distance parameter has a higher composition quality.

In one implementation according to the first aspect, if a person quantity N in one of the any two frames of images is equal to 2 and a person quantity N in the other frame of image is greater than or equal to 2, the composition indicator further includes the closeness parameter, and the comparing composition indicators of any two frames of images in the plurality of frames of images further includes: when a difference between fourth distance parameters of the any two frames of images is less than a fourth threshold, determining whether a difference between closeness parameters of the any two frames of images is greater than or equal to a fifth threshold; and when the difference between the closeness parameters of the any two frames of images is greater than or equal to the fifth threshold, comparing the closeness parameters of the any two frames of images, where an image with a smaller closeness parameter has a higher composition quality.

In one implementation according to the first aspect, if person quantities in the any two frames of images are both greater than or equal to 2, the composition indicator further includes the compactness parameter, and the comparing composition indicators of any two frames of images in the plurality of frames of images includes: when a difference between compactness parameters of the any two frames of images is greater than or equal to a sixth threshold, comparing the compactness parameters of the any two frames of images, where an image with a smaller compactness parameter has a higher composition quality.

In one implementation according to the first aspect, the target person is every person in the image, or the target person is a person whose area proportion in the image is greater than a preset threshold and whose center of mass position is within a preset region.

In one implementation according to the first aspect, the method further includes: performing human body detection, face detection, and keypoint detection on the plurality of frames of images to obtain human body detection results, face detection results, and keypoint detection results; and determining photographing statuses of all persons in the plurality of frames of images based on the human body detection results, the face detection results, and the keypoint detection results, where the photographing status includes a motion status of a person and one or more of the following statuses: a center of mass position of the person, a portrait type, and an area proportion of the person. The storing one or more frames of images with highest composition quality in the plurality of frames of images includes: storing one or more valid frames of images with highest composition quality in the plurality of frames of images, where the valid image is an image in which photographing statuses of all persons are valid.

In one implementation according to the first aspect, if the keypoint detection result includes only a top of head keypoint and a neck keypoint, the portrait type is a facial close-up, and the center of mass position of the person is an average coordinate point of the top of head keypoint and the neck keypoint.

In one implementation according to the first aspect, if the keypoint detection result includes only a top of head keypoint, a neck keypoint, a shoulder keypoint, and one or more of the following plurality of first keypoints, the portrait type is a bust portrait, and the center of mass position of the person is an average coordinate point of the neck keypoint and the shoulder keypoint, where the plurality of first keypoints include an arm keypoint and a wrist keypoint.

In one implementation according to the first aspect, if the keypoint detection result includes only a top of head keypoint, a neck keypoint, a shoulder keypoint, a hip keypoint, an arm keypoint, and one or more of the following plurality of second keypoints, the portrait type is a three-quarters length portrait/near-full-length portrait, and the center of mass position of the person is an average coordinate point of the top of head keypoint, the neck keypoint, the shoulder keypoint, the hip keypoint, and the arm keypoint, where the plurality of second keypoints include a wrist keypoint and a knee keypoint.

In one implementation according to the first aspect, if the keypoint detection result includes only a top of head keypoint, an ankle keypoint, and one or more of the following plurality of third keypoints, the portrait type is a full-length portrait, and the center of mass position of the person is a center point position of a human body box of the person, where the plurality of third keypoints include a shoulder keypoint, a hip keypoint, an arm keypoint, a wrist keypoint, and a knee keypoint.

In one implementation according to the first aspect, if the keypoint detection result does not include a top of head keypoint and a neck keypoint, the portrait type is a partial close-up, and the center of mass position of the person is an average coordinate point of all detected keypoints.

In one implementation according to the first aspect, the human body detection result includes the human body box of the person, and the area proportion of the person is a ratio of an area of the human body box to an area of the image.

In one implementation according to the first aspect, the face detection result includes a face box of the person, and the face position is a center point position of the face box or a center of mass position of the head of the person.

In one implementation according to the first aspect, if the person is in a moving state, and the portrait of the person is not a full-length portrait or a half-length portrait and does not include at least one of the top of head keypoint, the neck keypoint, the ankle keypoint, or the wrist keypoint, the photographing status of the person is invalid.

In one implementation according to the first aspect, if the person is in a static state, the person is not opening eyes and not smiling, and the portrait is a bust portrait with an area proportion greater than a seventh threshold or does not include the top of head keypoint and the neck keypoint, the photographing status of the person is invalid.

According to a second aspect, an electronic device is provided in this application. The electronic device includes a memory and a processor; the processor is coupled to the memory; the memory is configured to store computer program code, and the computer program code includes computer instructions; and when the computer instructions are executed by the processor, the electronic device is enabled to perform the method according to any one of the implementations of the first aspect.

According to a third aspect, a computer-readable storage medium is provided in this application, including computer instructions. When the computer instructions are run on an electronic device, the electronic device is enabled to perform the method according to any one of the implementations of the first aspect.

According to a fourth aspect, a computer program product is provided in this application. When the computer program product runs on a terminal device, the terminal device is enabled to perform the method according to the first aspect and any one of the possible designs of the first aspect.

According to a fifth aspect, this application provides a chip system. The chip system includes one or more interface circuits and one or more processors. The interface circuit and the processor are interconnected through a line. The foregoing chip system may be applied to a terminal device that includes a communication module and a memory. The interface circuit is configured to receive a signal from a memory of the terminal device, and send the received signal to the processor, where the signal includes computer instructions stored in the memory. When the processor executes the computer instructions, the terminal device can perform the method according to the first aspect and any one of the possible designs of the first aspect.

For the technical effects of any one of the designs in the second aspect to the fifth aspect, refer to the technical effects of the different designs in the first aspect. Details are not described herein again.

### BRIEF DESCRIPTION OF DRAWINGS

FIG. 1 is a diagram of an interface according to an embodiment of this application;
FIG. 2 is a diagram of another interface according to an embodiment of this application;
FIG. 3 is a diagram of a structure of an electronic device according to an embodiment of this application;
FIG. 4(A) and FIG. 4(B) are a diagram of a group of interfaces according to an embodiment of this application;
FIG. 5(A) and FIG. 5(B) are a diagram of a group of interfaces according to an embodiment of this application;
FIG. 6(A) and FIG. 6(B) are a diagram of a group of interfaces according to an embodiment of this application;
FIG. 7A is a schematic flowchart 1 of an image capture method according to an embodiment of this application;
FIG. 7B is a diagram of another interface according to an embodiment of this application;
FIG. 8 is a schematic flowchart 2 of an image capture method according to an embodiment of this application;
FIG. 9 is a diagram of a portrait according to an embodiment of this application;
FIG. 10 is a diagram of another portrait according to an embodiment of this application;
FIG. 11 is a diagram of still another portrait according to an embodiment of this application;
FIG. 12 is a diagram of yet another portrait according to an embodiment of this application;
FIG. 13A is a schematic flowchart 3 of an image capture method according to an embodiment of this application;
FIG. 13B shows reference positions of a golden triangle composition rule, a composition rule of thirds, a diagonal composition rule, a center composition rule;
FIG. 14 is a schematic flowchart 4 of an image capture method according to an embodiment of this application;
FIG. 15 is a diagram of a structure of a binary spanning tree according to an embodiment of this application;
FIG. 16 is a diagram of a minimum spanning tree according to an embodiment of this application;
FIG. 17 is a diagram of a structure of another binary spanning tree according to an embodiment of this application;
FIG. 18 is a schematic flowchart 5 of an image capture method according to an embodiment of this application;
FIG. 19 is a schematic flowchart 6 of an image capture method according to an embodiment of this application; and
FIG. 20 is a diagram of a structure of a chip system according to an embodiment of this application.

### DESCRIPTION OF EMBODIMENTS

The following describes the technical solutions of embodiments of this application with reference to the accompanying drawings in embodiments of this application. In descriptions of embodiments of this application, terms used in the following embodiments are merely intended to describe particular embodiments, but are not intended to limit this application. As used in the specification and the appended claims of this application, the singular expressions "a/an", "said", "the foregoing", "the" and "this" are intended to include such expressions as "one or more", unless otherwise clearly indicated in the context. It should be further understood that in the following embodiments of this application, "at least one" and "one or more" refer to one, two, or more. The term "and/or" is used for describing an association relationship between associated objects, and indicates that three relationships may exist. For example, A and/or B may indicate the following three conditions: Only A exists, both A and B exist, and only B exists, where A and B may be singular or plural. A character "/" generally indicates an "or" relationship between associated objects before and after the character.

Reference like "one embodiment" or "some embodiments" described in this specification means that a particular characteristic, structure, or feature described with reference to one or more embodiments is included in the one or more embodiments of this application. Therefore, statements "in one embodiment", "in some embodiments", "in some other embodiments", "in other embodiments", and the like appear in different places in this specification do not necessarily refer to the same embodiment, but mean "one or more but not all embodiments", unless otherwise specified in other ways. Terms "include", "comprise", "have", and variations thereof all mean "including but not limited to", unless otherwise specified. The term "connection" includes a direct connection and an indirect connection, unless otherwise specified. The terms "first" and "second" are merely intended for a purpose of description, and shall not be understood as an indication or implication of relative importance or implicit indication of a quantity of indicated technical features.

In embodiments of this application, the terms such as "example" or "for example" are used to represent giving an example, an illustration, or a description. Any embodiment or design scheme described by using "example" or "for example" in embodiments of this application should not be explained as being more preferred or having more advantages than another embodiment or design scheme. In particular, the terms such as "example" or "for example" are intended to present a related concept in a specific manner.

In order to enable users to obtain high-quality images, a solution that uses related technologies to provide a basic composition scheme to guide the users is provided. Specifically, an electronic device may perform face detection or human body detection on a person in a picture to obtain a face position or a human body position; and when the face position or the human body position conforms to a predefined photography template, a photographing operation is triggered. However, this scheme at least includes the following two issues:

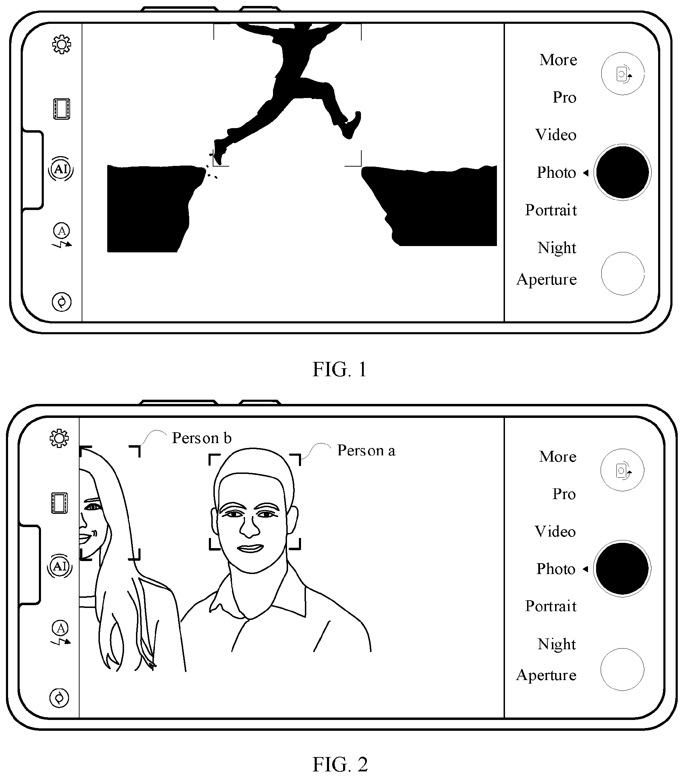

One issue is picture imbalance that occurs in a shot image and that is caused by a lack of consideration of distribution of person weight in the picture. For example, as shown in FIG. 1, an electronic device performs human body detection on a person in a picture, and performs a photographing operation when determining that a human body position conforms to a predefined photography template. However, due to a lack of consideration of distribution of person weight in the picture, the head of the person is not included in the picture, causing picture imbalance and low image quality.

The second issue is improperness that is of positions of some persons in a shot image and that is caused by a lack of consideration of a position relationship between a plurality of persons in a multi-person photographing scenario. For example, as shown in FIG. 2, an electronic device performs face detection on two persons (Person a and Person b) in a picture, and performs a photographing operation when detecting that one of the persons (for example, Person a) matches a predefined photography template. However, due to a lack of consideration of a position relationship between Person b and Person a, only a half face of Person b is included in the picture, causing low image quality.

Embodiments of this application provide an image capture method, to determine a photographing status of each person in a plurality of frames of images after obtaining the plurality of frames of images, and ultimately preserve a valid image in the plurality of frames of images. The valid image is an image in which photographing statuses of all persons are valid.

The photographing status is a state of a person in a picture, including but not limited to a motion state of the person, a portrait type of the person, a keypoint for the person, an area proportion of the person in the picture, a position of the person in the picture, and whether the person is opening eyes or smiling.

For example, the motion state of the person includes but is not limited to walking, running, jumping, playing badminton, swimming, being static, and the like. The portrait type of the person includes facial close-up, bust portrait, three-quarters length portrait/near-full-length portrait, full-length portrait, and partial close-up, for roughly representing rough truncation states of person body parts in the picture.

An electronic device may preset a plurality of invalid states. If a photographing status of a person is not any of the plurality of invalid states, it can be determined that the photographing status of the person is valid. For example, the plurality of invalid states include: The person is running or playing badminton, but a part of limbs (like head, hands, feet) of the person is missing (that is, not shown in a picture); the person is in a static state, but the person is not opening eyes and/or not smiling; and the person in the picture is in a static state and located in a corner position (like four edges and four corners) of the picture.

It can be seen that determining the photographing status of each person helps avoid reserving of an image with picture imbalance and avoid reserving of an image obviously lacking aesthetic appeal (such as missing of arms and legs), to ensure image quality.

Furthermore, the electronic device may evaluate composition quality of the plurality of frames of images and reserve one or more frames of images with higher composition quality in the plurality of frames of images.

In this embodiment, the composition quality of the image may be evaluated from at least three aspects, namely: basic composition, social relationships in a multi-person scenario, and person position arrangement in the multi-person scenario. The basic composition reflects whether a position of a person matches a common photography composition rule. If the position of the person matches the common photography composition rule, it can be determined that the basic composition of the image conforms to common aesthetics and therefore composition quality is high.

The social relationships in the multi-person scenario can be used, when there are a plurality of persons in the image, to determine whether relationships between the plurality of persons are close. If the relationships between the plurality of persons are close, it can be determined that the image may have abundant emotions, which can affect the viewer emotionally and therefore composition quality is high.

The person position arrangement in the multi-person scenario may be used when there are three or more persons in the image, to determine whether arrangement between the plurality of persons is scattered. If the arrangement between the plurality of persons is not scattered, it can be determined that the position arrangement of plurality of persons in the image is proper and therefore composition quality is high.

In comparison with a manner of simply matching a human body position/face position with a photography template, in this application, there is no need for presetting photography templates, but composition quality of images is evaluated from a plurality of dimensions after a plurality of frames of images are captured, and an image with good basic composition, close relationships between persons, and proper person arrangement is reserved. Images obtained in this way can avoid rigidity of the photography template, providing users free space to express themselves, and assisting the users in obtaining high-quality images.

It should be noted that the image capture method provided in embodiments of this application may be applied to a scenario in which an electronic device uses a camera application, and an image frame with high composition quality can be captured in this scenario.

For example, according to the image capture method provided in embodiments of this application, a plurality of frames of images can be actively obtained during an image preview process before photo taking/video recording of an electronic device, and one or more frames of images with high composition quality can be stored.

For another example, according to the image capture method provided in embodiments of this application, one or more frames of images with high composition quality can be stored from a plurality of frames of images included in a video stream during a video recording process of an electronic device.

In the following, the image preview process before photo taking/video recording is mainly used as an example to illustrate the image capture method provided in embodiments of this application.

It should be noted that, the electronic device provided in embodiments of this application may be a device having a camera, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, and/or a smart city device. A specific type of the electronic device is not specifically limited in embodiments of this application.

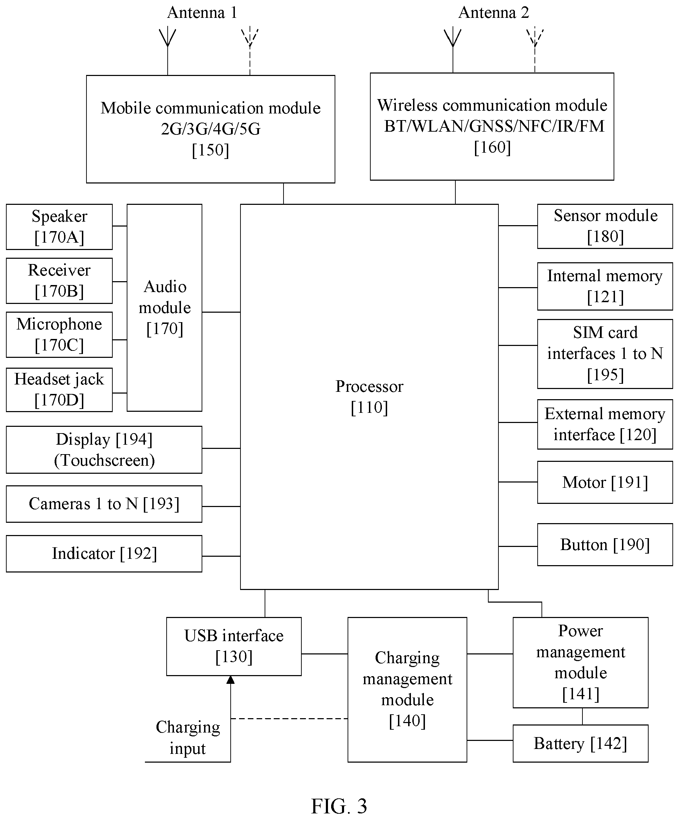

FIG. 3 is a diagram of a structure of an electronic device according to an embodiment of this application. As shown in FIG. 3, the electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The sensor module 180 may include a sensor such as a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

It may be understood that, the structure shown in this embodiment does not constitute a specific limitation on the electronic device. In some other embodiments, the electronic device may include more or fewer components than those shown in the figure, or some components may be combined, or some components may be split, or a different component arrangement may be used. The components in the figure may be implemented by hardware, software or a combination of software and hardware.

The processor 110 may include one or more processing units, for example, the processor 110 may include an application processor (application processor, AP), a modem processor, a graphics processing unit (graphics processing unit, GPU), an image signal processor (image signal processor, ISP), a controller, memory, a video codec, a digital signal processor (digital signal processor, DSP), a baseband processor, a neural-network processing unit (neural-network processing unit, NPU), and/or the like. Different processing units may be separate devices, or may be integrated into one or more processors.

The controller may be a neural center and a command center of the electronic device. The controller may generate an operation control signal based on an instruction operation code and a time sequence signal, to control instruction reading and instruction execution.

A memory may be further disposed in the processor 110, and is configured to store instructions and data. In some embodiments, the memory in processor 110 is a cache. The memory may store an instruction or data just used or repeatedly used by the processor 110. If the processor 110 needs to use the instruction or the data again, the processor 110 may directly invoke the instruction or the data from the memory. This avoids repeated access, and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment is merely an example for description, and does not constitute a limitation on the structure of the electronic device. In some other embodiments, the electronic device may alternatively use an interface connection manner different from an interface connection manner in the foregoing embodiment, or use a combination of a plurality of interface connection manners.

The charging management module 140 is configured to receive a charging input from a charger. The charger may be a wireless charger or may be a wired charger. The charging management module 140 may further supply power to the electronic device by using a power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. In some embodiments, the power management module 141 and the charging management module 140 may alternatively be disposed in a same component.

A wireless communication function of the electronic device may be implemented through the antenna 1, the antenna 2, the mobile communication module 150, the wireless communication module 160, the modem processor, the baseband processor, and the like. In some embodiments, in the electronic device, the antenna 1 is coupled to the mobile communication module 150, and the antenna 2 is coupled to the wireless communication module 160, so that the electronic device can communicate with a network and another device by using a wireless communication technology.

The antenna 1 and the antenna 2 are configured to transmit and receive electromagnetic wave signals. Each antenna in the electronic device may be configured to cover one or more communication frequency bands. Different antennas may be further multiplexed to increase antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that includes 2G/3G/4G/5G or the like and that is applied to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation.

The mobile communication module 150 may further amplify a signal modulated by the modem processor, and convert, through the antenna 1, the signal into an electromagnetic wave for radiation. In some embodiments, at least some functional modules of the mobile communication module 150 may be arranged in the processor 110. In some embodiments, at least some functional modules of the mobile communication module 150 may be disposed in a same device as at least some modules of the processor 110.

The wireless communication module 160 may provide wireless communication solutions applicable to the electronic device, including WLAN (for example, a (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC), an infrared (infrared, IR) technology, and the like.

The wireless communication module 160 may be one or more devices that integrate at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, through the antenna 2, the signal into an electromagnetic wave for radiation.

The electronic device implements a display function by using the GPU, the display 194, the application processor, and the like. The GPU is a microprocessor for image processing and connects the display 194 to the application processor. The GPU is configured to perform mathematical and geometric calculations, and is configured for image rendering. The processor 110 may include one or more GPUs, and the one or more GPUs execute program instructions to generate or change display information.

The display 194 is configured to display an image, a video, and the like. The display 194 includes a display panel.

The electronic device can implement a photographing function by using the ISP, the camera 193, the video codec, the GPU, the display 194, the application processor, and the like. The ISP is configured to process data fed back by the camera 193. The camera 193 is configured to capture a static image or a video. In some embodiments, the electronic device may include 1 or N cameras 193. N is a positive integer greater than 1.

The external memory interface 120 may be configured to connect to an external storage card, for example, a micro SD card, to extend a storage capability of the electronic device. The external storage card communicates with the processor 110 through the external memory interface 120, to implement a data storage function. For example, files such as music and a video are stored in the external storage card.

The internal memory 121 may be configured to store computer-executable program code, and the executable program code includes instructions. The processor 110 runs the instructions stored in the internal memory 121, to implement various functional applications and data processing of the electronic device. For example, in this embodiment of this application, the processor 110 may execute the instructions stored in the internal memory 121, and the internal memory 121 may include a program storage region and a data storage region.

The program storage area may store an operating system, an application required by at least one function (for example, a sound playback function and an image display function), and the like. The data storage area may store data (for example, audio data, and a phone book) created in a process of using the electronic device, and the like. In addition, the internal memory 121 may include a high-speed random access memory, and may further include a nonvolatile memory, for example, at least one magnetic disk storage device, a flash memory device, or a universal flash storage (universal flash storage, UFS).

The electronic device may implement an audio function, for example, music playing and sound recording, by using the audio module 170, the speaker 170A, the receiver 170B, the microphone 170C, the headset jack 170D, the application processor, and the like. The button 190 includes a power button, a volume button, and the like. The button 190 may be a mechanical button, or may be a touch button. The motor 191 may generate a vibration prompt. The motor 191 may be configured to provide an incoming call vibration prompt or a touch vibration feedback. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device. The electronic device may support 1 or N SIM card interfaces, and N is a positive integer greater than 1. The SIM card interface 195 can support a nano-SIM card, a micro-SIM card, a SIM card, and the like.

The following describes the image capture method provided in this application in detail with reference to the accompanying drawings.

After an electronic device starts a camera application, the electronic device may actively shoot a plurality of frames of images and reserve one or more frames of images with higher quality in the plurality of frames of images.

In an optional implementation, the camera application has an automatic capture function (also referred to as highlight capture, smart capture, and the like). The automatic capture function means that the electronic device can actively capture a highlight picture through intelligently recognizing a specific picture, such as smiling, jumping, and running of a person, or a pet, and reserve a valid and high-composition-quality image. In other words, in a state of already enabling the automatic capture function, the electronic device can actively shoot a plurality of frames of images and reserve the valid and high-composition-quality image in the plurality of frames of images.

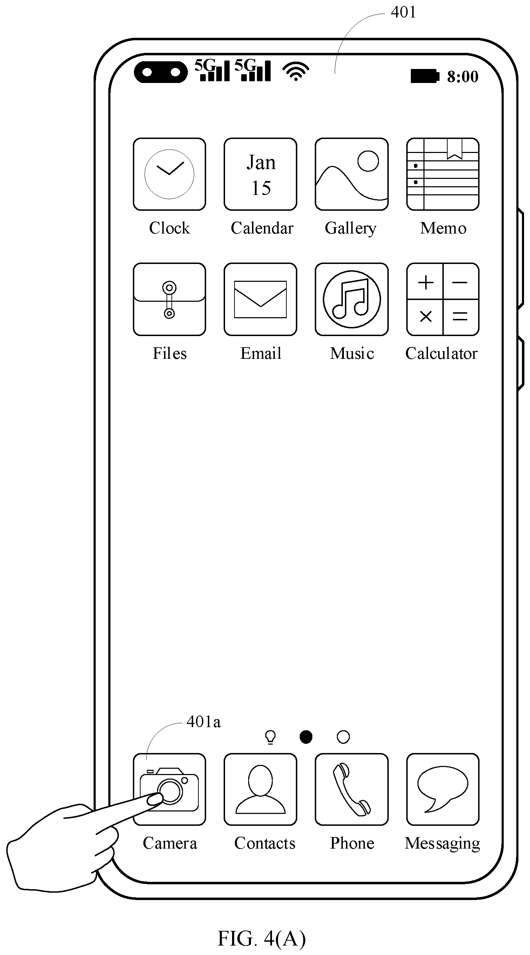

For example, the electronic device may be a mobile phone, and the process of enabling the automatic capture function may be shown in FIG. 4(A) to FIG. 5(B).

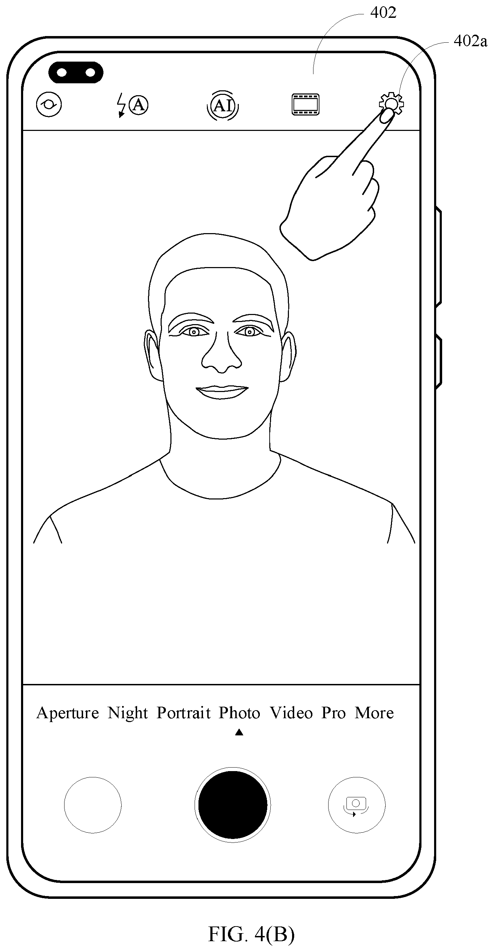

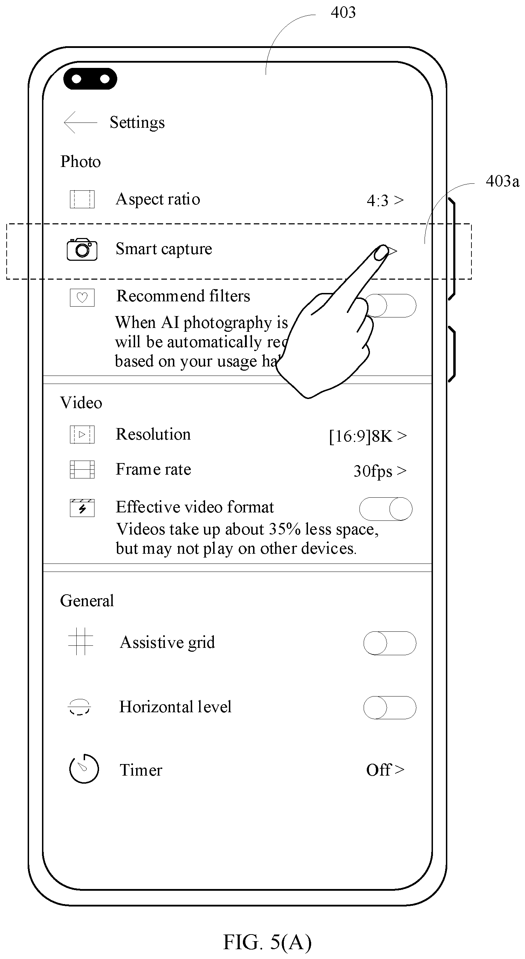

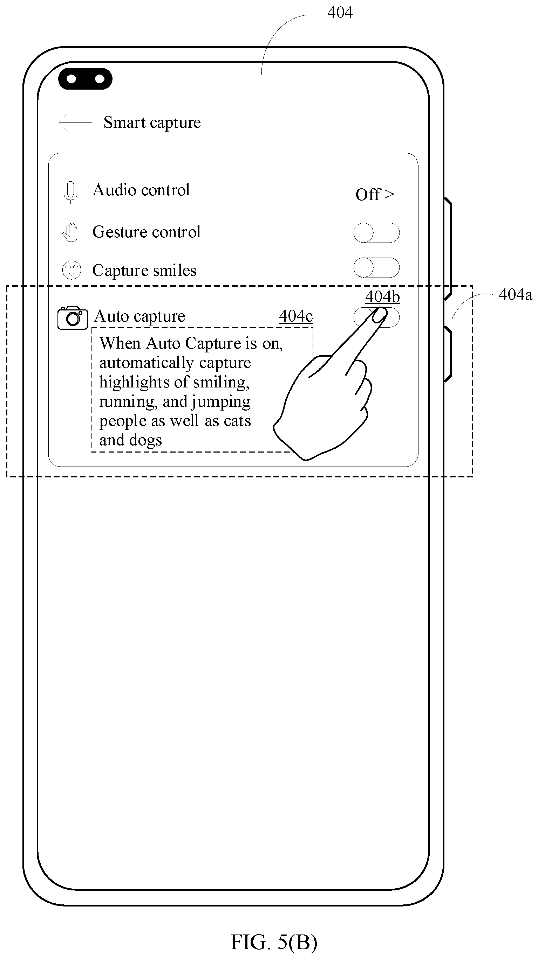

As shown in FIG. 4(A), the mobile phone may display an interface 401 (also referred to as main interface, desktop, Home screen, and the like). The interface 401 includes icons of a plurality of applications, for example, an icon 401a of a camera application, an icon of a setting application, and the like. If a user wants to open the camera application, the user may tap the icon 401a of the camera application. The mobile phone may receive the operation of tapping the icon 401a of the camera application by the user, and in response to the operation, the mobile phone starts the camera application and displays an interface 402 shown in FIG. 4(B). The interface 402 is a photographing preview interface used to display an image captured by a camera in real time. As shown in FIG. 4(B), the interface 402 includes a setting button 402a, a photo button, and the like. The mobile phone may receive an operation of tapping the settings button 402a by the user, and in response to the operation, the mobile phone may display an interface 403 shown in FIG. 5(A). The interface 403 includes a plurality of setting options, such as Aspect ratio, Smart capture 403a, Recommend filters, and the like. In response to an operation of the user on Smart capture 403a, the mobile phone may display an interface 404 shown in FIG. 5(B). The interface 404 includes options such as Audio control, Gesture control, Capture smiles, and Auto capture 404a. In addition, the Auto capture option 404a includes an on/off button 404b and prompt information 404c, and the user may enable or disable an automatic capture function by tapping the on/off button 404b. The prompt information 404c specifically describes the automatic capture function, for example, "When Auto capture is on, automatically capture highlights of smiling, running, and jumping people as well as cats and dogs".

In an optional implementation, the electronic device may further store a valid and high-composition-quality image into a gallery for the user to view the captured image from the gallery.

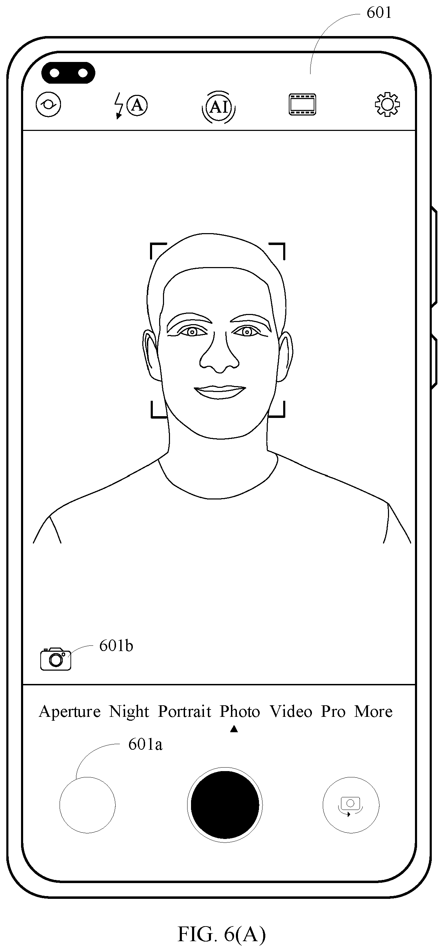

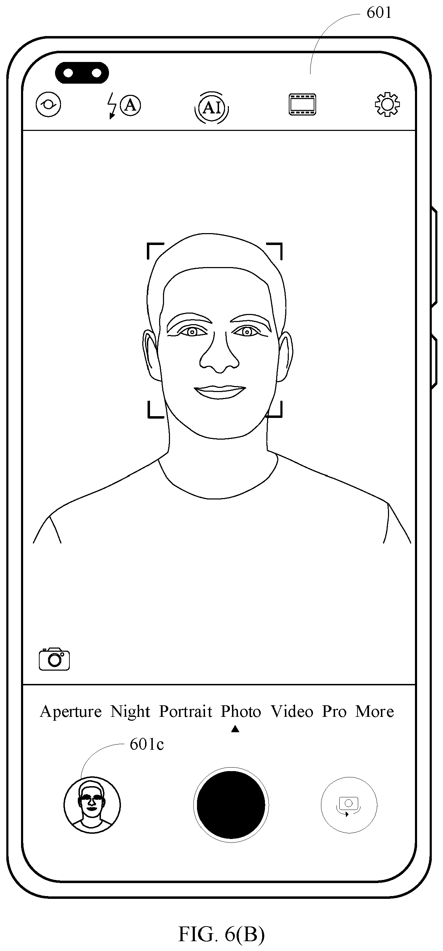

For example, as shown in FIG. 6(A), the electronic device (like the mobile phone) may display an interface 601. The interface 601 is a photographing preview interface used to display an image captured by the camera in real time. The interface 601 further includes a thumbnail 601a and an icon 601b. The thumbnail 601a is a thumbnail of a latest frame of image stored on the mobile phone. The icon 601b indicates whether the automatic capture function is enabled. The mobile phone may receive an operation of the user on the icon 601b, and in response to the operation, the mobile phone may display the interface 404 shown in FIG. 5(B), to perform setting on the automatic capture function. In addition, as shown in FIG. 6(B), if the mobile phone captures a valid and high-composition-quality image during displaying the interface 601, the mobile phone may store the image into the gallery and display a thumbnail 601c. The thumbnail 601c is a thumbnail of the image just captured by the mobile phone and stored into the gallery. If the user wants to view the image just stored on the electronic device, the user may tap the thumbnail 601c. The mobile phone may receive an operation of the user on the thumbnail 601c, and in response to the operation, the mobile phone may display the image corresponding to the thumbnail 601c.

In this embodiment, the electronic device may evaluate image quality from at least two aspects: photographing statuses of all persons in an image and composition quality of the image, and reserve, from a plurality of frames of images, one or more frames of images in which photographing statuses of all persons are valid and composition quality is high.

To provide clearer descriptions of a process of evaluating image quality by an electronic device, the following describes, with reference to the accompanying drawings, a process of determining photographing statuses of all persons in an image by the electronic device and a process of determining composition quality of the image by the electronic device. It should be noted that the image may be any frame of image in preview stream image data obtained by a camera in real time. This is not specifically limited herein.

As mentioned above, the photographing status is a status of a person in a picture, including but not limited to a motion status of the person, a truncation state of the person in the picture, a center of mass position of the person, an area proportion of the person in the picture, and whether the person is opening eyes or smiling. The following first provides specific descriptions of a process of determining a truncation state of a person in a picture by an electronic device.

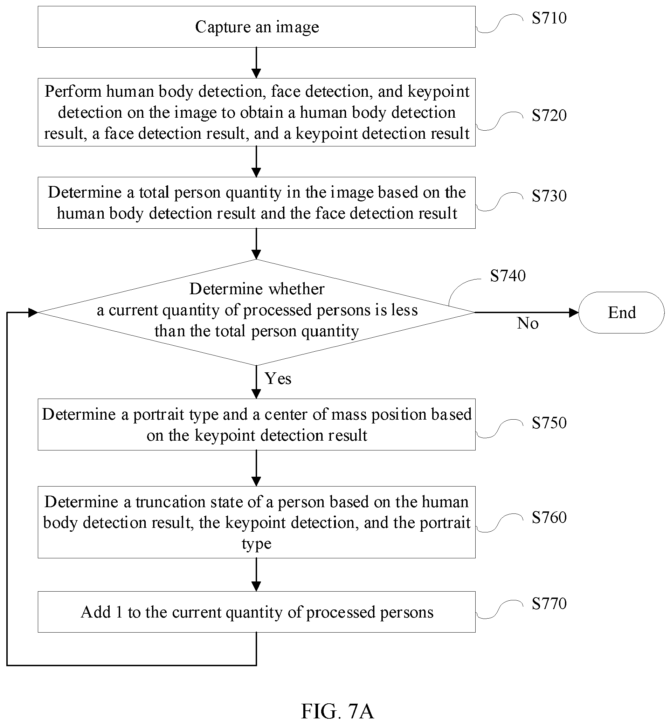

FIG. 7A is a schematic flowchart 1 of an image capture method according to an embodiment of this application, and provides specific descriptions of a process of determining a truncation state of an image person in a picture by an electronic device. As shown in FIG. 7A, the image capture method includes:
S710: Capture an image.

It should be noted that a camera may obtain preview stream image data in real time, and the preview stream image data includes a plurality of frames of images. The image in S710 may be any one of the plurality of frames of images.

S720: Perform human body detection, face detection, and keypoint detection on the image to obtain a human body detection result, a face detection result, and a keypoint detection result.

For example, the electronic device may input the image separately into a human body detection model, a face detection model, and a keypoint detection model to obtain the human body detection result, the face detection result, and the keypoint detection result.

It should be noted that the human body detection model, the face detection model, and the keypoint detection model are all models trained to converge. The human body detection model is used to recognize a human body in the image and determine a position of a human body box. The face detection model is used to recognize a human face in the image and further identify whether the face is opening eyes and smiling. The face detection result may include a position of a face box, and a result about whether the face is opening eyes and whether the face is smiling. The keypoint detection model may be used to recognize human body keypoints of each person in the image. The keypoints include but are not limited to top of head, neck, left shoulder, right shoulder, left hip, right hip, left knee, right knee, left ankle, right ankle, left elbow (also referred to as left arm), right elbow (also referred to as right arm), left wrist, right wrist, and the like.

S730: Determine a total person quantity in the image based on the human body detection result and the face detection result.

In an optional implementation, the electronic device may perform a matching operation between all face boxes and all human body boxes. A purpose of performing a matching operation between a face box and a human body box is to determine whether the face box and the human body box belong to a same person. It can be understood that, if the face box matches the human body box, it may be determined that the face box and the human body box belong to the same person; or if the face box does not match the human body box, it may be determined that the face box and the human body box do not belong to the same person.

For example, the electronic device may extract feature points from all human body boxes and feature points from all face boxes, and perform similarity matching based on the feature points to determine a face box and a human body box that match each other. For another example, the electronic device may input a face box and human body box into a matching model to obtain a confidence level of matching between the human body box and the face box. When the confidence level of matching between the human body box and the face box is higher than a preset threshold, the human body box matches the face box.

The person quantity N in the image is a sum of a quantity of human body boxes having matched face boxes (or a quantity of face boxes having matched human body boxes), a quantity of face boxes having no matched human body boxes, and a quantity of human body boxes having no matched face boxes.

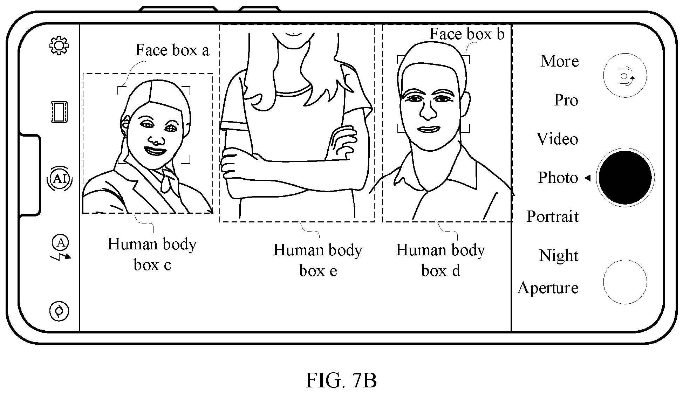

For example, FIG. 7B shows an image. The image includes a face box a, a face box b, a human body box c, a human body box d, and a human body box e. The face box a matches the human body box c, the face box b matches the human body box d, and there is no face box matching the human body box e. In this case, a quantity of human body boxes having matched face boxes in the image is 2, a quantity of face boxes having no matched human body boxes is 0, and a quantity of human body boxes having no matched face boxes is 1. Therefore, it can be determined that the image includes 3 persons, that is, a total person quantity is 3.

S740: Determine whether a current quantity of processed persons is less than the total person quantity.

If the current quantity of processed persons is less than or equal to the total person quantity, perform S750; or if the current quantity of processed persons is greater than the total person quantity, the process ends.

S750: Determine a portrait type and a center of mass position based on the keypoint detection result.

It may be understood that, the electronic device may determine the portrait type and a position of the person in the picture based on the keypoint detection result. In this embodiment, because the person has a specific contour, the position of the person in the picture is represented by the center of mass position of the person. In other words, the electronic device may determine the portrait type and the center of mass position of the person based on the keypoint detection result.

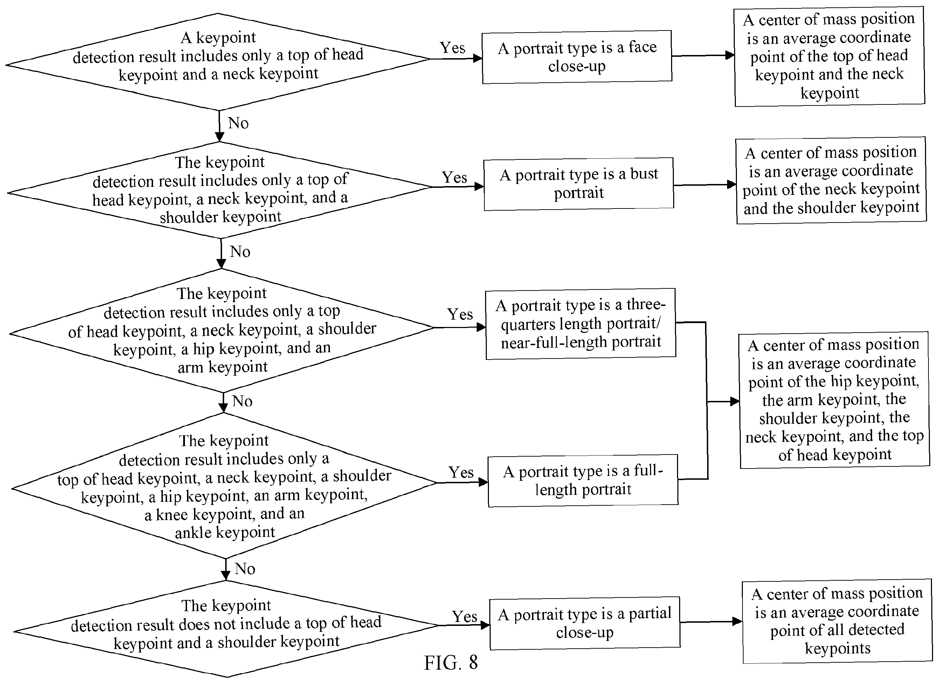

FIG. 8 is a flowchart in which an electronic device determines a portrait type and a center of mass position of a person based on a keypoint detection result. It should be noted that all coordinates mentioned in the following are coordinates in a coordinate system established with an upper left vertex of an image as an origin, a width of the image as a horizontal axis, and a height of the image as a vertical axis.

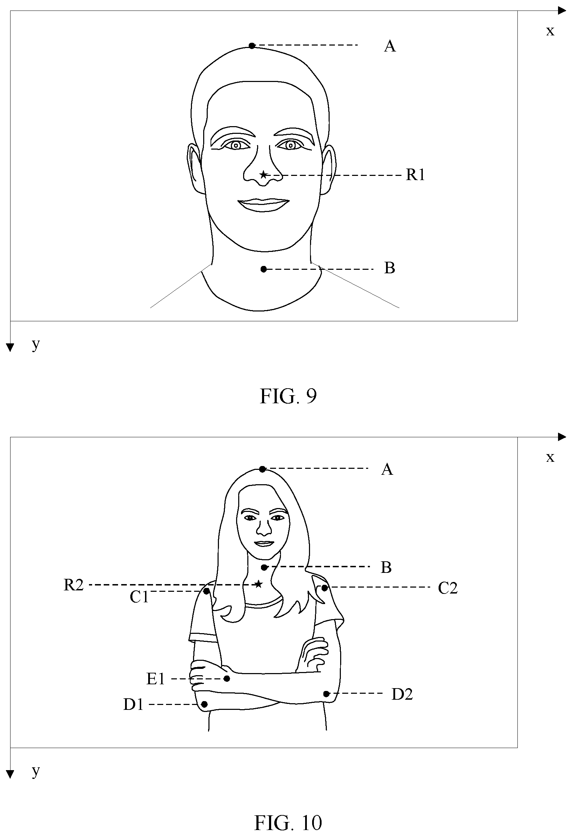

As shown in FIG. 8, when the keypoint detection result includes only a top of head keypoint and a neck keypoint, the electronic device may determine that the portrait type is a facial close-up, and determine that the center of mass position of the person is an average coordinate point of the top of head keypoint and the neck keypoint. For example, as shown in FIG. 9, the electronic device may perform keypoint detection on an image to obtain a top of head keypoint A and a neck keypoint B. Coordinates of the top of head keypoint A are (x1, y1), and coordinates of the neck keypoint B are (x2, y2). In this case, the electronic device may determine that a portrait type of the image is a facial close-up, and a center of mass position of a person is an average coordinate point R1 of the top of head keypoint A and the neck keypoint B. Coordinates of the average coordinate point R1 are ((x1+x2)/2, (y1+y2)/2).

In an optional implementation, when the keypoint detection result includes only a top of head keypoint, a neck keypoint, and a shoulder keypoint (including a left shoulder or a right shoulder), the electronic device may determine that the portrait type is a bust portrait, and determine that the center of mass position of the person is an average coordinate point of the neck keypoint and the shoulder keypoint.

In some bust portraits, a user arm and wrist may alternatively be in the shot. Therefore, in another optional implementation, when the keypoint detection result includes a top of head keypoint, a neck keypoint, and a shoulder keypoint, and the keypoint detection result further includes an arm keypoint and/or a wrist keypoint, the electronic device may also determine that the portrait type is a bust portrait, and determine that the center of mass position of the person is an average coordinate point of the neck keypoint and the shoulder keypoint.

For example, as shown in FIG. 10, the electronic device may perform keypoint detection on an image to obtain a top of head keypoint A, a neck keypoint B, a left shoulder keypoint C1, a right shoulder keypoint C2, a left arm keypoint D1, a right arm keypoint D2, and a right wrist keypoint E1. Coordinates of the top of head keypoint A are (x1, y1), coordinates of the neck keypoint B are (x2, y2), coordinates of the left shoulder keypoint C1 are (x3, y3), and coordinates of the right shoulder keypoint C2 are (x4, y4). In this case, the electronic device may determine that a portrait type of the image is a bust portrait, and a center of mass position of a person is an average coordinate point R2 of the top of head keypoint A, the neck keypoint B, the left shoulder keypoint C1, and the right shoulder keypoint C2. Coordinates of the average coordinate point R2 are: $\left(\frac{{\sum }_{i = 1}^{N} xi}{N}, \frac{{\sum }_{i = 1}^{N} yi}{N}\right)$

N is a quantity of keypoints, and N is 4.

In an optional implementation, when the keypoint detection result includes only a top of head keypoint, a neck keypoint, a shoulder keypoint, a hip keypoint, and an arm keypoint, the electronic device may determine that the portrait type is a three-quarters length portrait/near-full-length portrait, and determine that the center of mass position of the person is an average coordinate point of the hip keypoint, the arm keypoint, the shoulder keypoint, the neck keypoint, and the top of head keypoint. A calculation for obtaining the average coordinate point is similar to the calculation for obtaining the average coordinate point R2 mentioned above, with a difference in N=5, that is, i ∈ [1,5]. This is not repeated herein again.

In some three-quarters length portraits/near-full-length portraits, a user wrist and knee may alternatively be in the shot. Therefore, in another optional implementation, when the keypoint detection result includes a top of head keypoint, a neck keypoint, a shoulder keypoint, , a hip keypoint, and an arm keypoint, if the keypoint detection result further includes a wrist keypoint and/or a knee keypoint, the electronic device may also determine that the portrait type is a three-quarters length portrait/near-full-length portrait, and determine that the center of mass position of the person is an average coordinate point of the top of head keypoint, the neck keypoint, the shoulder keypoint, the hip keypoint, and the arm keypoint.

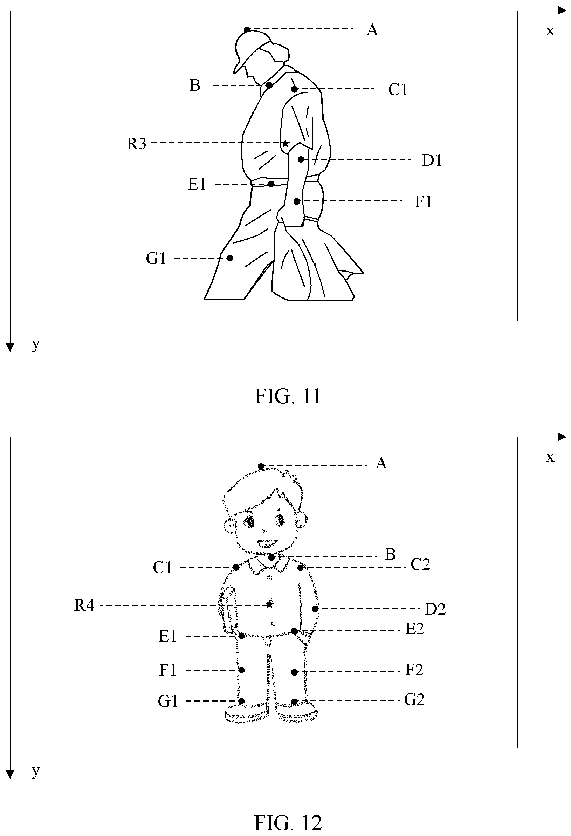

For example, as shown in FIG. 11, the electronic device may perform keypoint detection on an image to obtain a top of head keypoint A, a neck keypoint B, a left shoulder keypoint C1, a left arm keypoint D1, a left hip keypoint E1, a left wrist keypoint F1, and a left knee keypoint G1. In this case, the electronic device may determine that a portrait type of the image is a three-quarters length portrait/near-full-length portrait, and determine that a center of mass position of a person is an average coordinate point R3 of the top of head keypoint A, the neck keypoint B, the left shoulder keypoint C1, the left arm keypoint D1, and the left hip keypoint E1.

In an optional implementation, when the keypoint detection result includes only a top of head keypoint, a neck keypoint, a shoulder keypoint, a hip keypoint, an arm keypoint, a knee keypoint, and an ankle keypoint, the electronic device may determine that the portrait type is a full-length portrait, and determine that the center of mass position of the person is an average coordinate point of the top of head keypoint, the neck keypoint, the shoulder keypoint, the hip keypoint, and the arm keypoint.

In some full-length portraits, shoulders, hips, arms, wrists, or knees cannot be detected, for example, when the user is in a squatting pose or wearing loose clothing. Therefore, when the keypoint detection result includes only a top of head keypoint and an ankle keypoint, the electronic device may also determine that the portrait type is a full-length portrait. In this case, the electronic device may use a center point position of a human body box of the person as the center of mass position of the person. The center point of the human body box refers to an intersection point of two diagonal lines of the human body box.

For example, as shown in FIG. 12, the electronic device may perform keypoint detection on an image to obtain a top of head keypoint A, a neck keypoint B, a left shoulder keypoint C1, a right shoulder keypoint C2, a right arm keypoint D2, a left hip keypoint E1, a right hip keypoint E2, a left knee keypoint F1, a right knee keypoint F2, a left ankle keypoint G1, and a right ankle keypoint G2. In this case, the electronic device may determine that a portrait type of a person is a full-length portrait, and a center of mass position of the person is an average coordinate point R4 of the top of head keypoint A, the neck keypoint B, the left shoulder keypoint C1, the right shoulder keypoint C2, the right arm keypoint D2, the left hip keypoint E1, and the right hip keypoint E2.

In an optional implementation, when the keypoint detection result does not include a top of head keypoint and a shoulder keypoint, the electronic device determines that the portrait type is a partial close-up, and determines that the center of mass position of the person is an average coordinate point of all detected keypoints. For example, if a keypoint detection result includes only an arm, the electronic device may determine that a portrait type is a close-up of the arm, and a center of mass position is position coordinates of the arm.

S760: Determine a truncation state of the person based on the human body detection result, the keypoint detection, and the portrait type.

It can be understood that the portrait type can roughly represent a rough truncation state of a person body part in a picture. For example, if the portrait type is a facial close-up, it indicates that only the head of the person is included in the picture, and the part below the head of the person is truncated. If the portrait type is a bust portrait, it indicates that the upper body of the person is included in the picture, and the part below the waist of the person is truncated. If the portrait type is a three-quarters length portrait/near-full-length portrait, it indicates that the part above the calf/ankle of the person is included in the picture, and the feet of the person are truncated. If the portrait type is a full-length portrait, it indicates that the entire body of the person is included in the picture.

Specifically, for a truncation state of a specific part (like limbs and head) of a human body, the electronic device may determine the state based on the keypoint detection result. For example, if a keypoint detection result does not include a top of head keypoint and a neck keypoint, it may be determined that the head of a person in a picture is truncated; and for another example, if a keypoint detection result does not include elbows and wrists, it may be determined that the hands of a person in a picture are truncated.

S770: Add 1 to the current quantity of processed persons.

In this way, when N persons are included in the image, the electronic device can determine portrait types and center of mass positions of the N persons.

In an optional implementation, the electronic device may further input the image into a motion recognition model to determine a motion status of the person. The motion recognition model is a neural network model trained to converge in advance, and can be used to recognize a motion status of the person in the image, including but not limited to walking, running, jumping, playing badminton, swimming, throwing, water fightings, being static, and the like.

In an optional implementation, the electronic device may further determine an area proportion of each person based on the human body detection result. Specifically, the area proportion of the person is a proportion of an area of the person in the image, or may be a ratio of an area of the person in an area of the image. In an optional implementation, the area of the person is an area of a corresponding human body box of the person.

After the electronic device determines photographing statuses of all persons in the image, whether the image is a valid image can be determined.

In an optional implementation, the image may include a focal person and a valid person, and the electronic device may separately perform validity judgment on the focal person and the valid person. The focal person mainly refers to a main character in the image, or refers to a protagonist. The valid person is a person less important than the main character in the image, for example, a passersby.

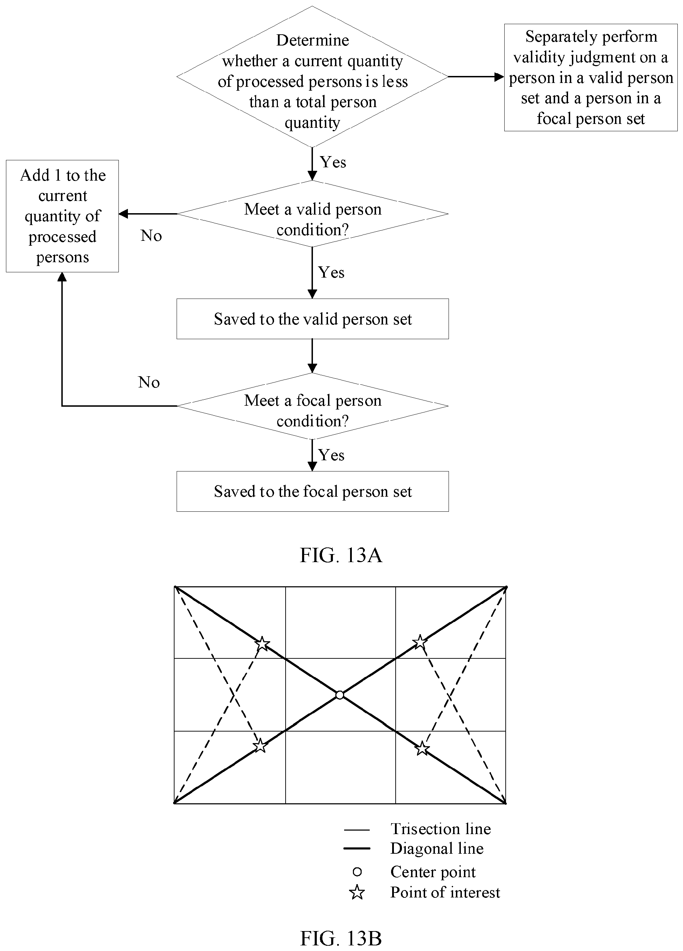

As shown in FIG. 13A, the electronic device may sequentially determine whether each person meets a valid person condition, and if a person meets the valid person condition, the person is saved to a valid person set. If the person further meets a focal person condition, the person is saved to a focal person set. After determining whether all persons in the image are focal persons or valid persons, the electronic device may separately perform validity judgment on a person in the valid person set and a person in a focal person set.

In an optional implementation, the electronic device may classify the person into the valid person and the focal person based on the area proportion of the person and the center of mass position of the person. The valid person condition may include: An area proportion of a person is greater than a threshold M1. The focal person condition may include: An area proportion of a person is greater than the threshold M1 and a center of mass position of the person is within a preset region of an image. For example, the preset region may be a region formed by four points of interest in the image, a region formed by trisection lines of the image, or the like. This is not specifically limited herein. In other words, a person whose area proportion is greater than the threshold M1 can be referred to as a valid person, and a person whose area proportion is greater than the threshold M1 and whose center of mass position is within the preset region of the image can be referred to as a focal person.

In this embodiment, the electronic device may separately set a plurality of invalid states for the valid person and the focal person. In comparison with the focal person, the valid person may be in conditions such as limb truncation, unnatural/flat expression, and the like.

For example, for the focal person, the plurality of invalid states may include: When the person is jumping or running, the portrait type is not a full-length portrait, or a limb is truncated; when the person is throwing or playing badminton, the portrait type is neither a full-length portrait nor a half-length portrait, or the head is truncated; when the person is splashing water or playing table tennis, face truncation or elbow truncation does not exist in the image; the person is in a static state and is not opening eyes or smiling, or has face truncation; the person is in a static state and has an excessively large area proportion when the face is not detected; and the person is in a static state, the portrait type is a facial close-up or a bust portrait, and the center of mass position of the person is outside the preset region.

It can be understood that, if a photographing status of the focal person does not match any one of the invalid states mentioned above, it can be determined that the photographing status of the focal person is valid.

For the valid person, the plurality of invalid states of the valid person may include: When the person is jumping or running, the portrait type is not a full-length portrait, and the head is truncated. It can be understood that, if a photographing status of the valid person does not match any one of the invalid states mentioned above, it can be determined that the photographing status of the valid person is valid.

It should be noted that the plurality of invalid states mentioned above are merely examples, and actually more invalid states can be set according to requirements.

In an optional implementation, when photographing statuses of all valid persons are valid and photographing statuses of all focal persons are valid, it is determined that the image is valid.

In an optional implementation, the electronic device may directly determine whether photographing statuses of all persons are valid without distinguishing between valid persons and focal persons, and determine that the image is valid when the photographing statuses of all the persons are valid. A principle of determining whether a photographing status of each person is similar to the foregoing principle of determining whether a photographing status of the focal person/valid person. Details are not described herein again.

The electronic device may further evaluate composition quality of the image. The composition quality of the image may be evaluated from at least three aspects: basic composition, social relationships in a multi-person scenario, and person position arrangement in the multi-person scenario. The following separately describes the three aspects.

### 1. Basic composition

Basic composition refers to a layout and a structure in a picture, specifically a position of a person in the picture. Common photography composition rules include but are not limited to a golden triangle composition rule, a composition rule of thirds, a diagonal composition rule, a center composition rule. Different composition rules may have different marker points or guide lines to assist in composition.

FIG. 13B shows reference positions of a golden triangle composition rule, a composition rule of thirds, a diagonal composition rule, a center composition rule. When the person is near any one of four points of interest, it can be determined that the image conforms to the golden triangle composition rule. When the person is near any one of trisection lines, it can be determined that the image conforms to the composition rule of thirds. When the person is near any one of diagonal lines, it can be determined that the image conforms to the diagonal composition rule. When the person is near the center point, it can be determined that the image conforms to the center composition rule.

In this embodiment, the electronic device may determine a distance parameter based on a distance from a center of mass position of a target person to a reference position, and measure a matching degree between an image and a preset composition rule based on the distance parameter. Different composition rules have different corresponding reference positions, and therefore have different corresponding distance parameters. It should be noted that the target person may be every person in the image or a focal person in the image.

For example, a target person is every person in an image with a dimension of width*height (width×height) and a center of mass position of (Massₓ, Mass_{y}), and the following first describes a process in which the electronic device determines matching degrees between the image and different composition rules when only one person is included in the image.

For the golden triangle composition rule, the reference position is four points of interest. The electronic device may calculate distances from a center of mass position to the four points of interest, and use a smallest distance among the four distances as a first distance parameter to represent a matching degree between the image and the golden triangle composition rule. When the first distance parameter is smaller, the matching degree between the image and the golden triangle composition rule is higher.

The first distance parameter satisfies: ${massDistance}_{AllPoint} = {min}_{i = 1 , 2 , 3 , 4} \left\{dis \left(i\right)\right\}$ *mαssDistance_{AllPoint}* represents the first distance parameter, and dis(i) represents a distance from the center of mass position to an i^{th} point of interest, where i=1, 2, 3, 4.

The distance from the center of mass position to any point of interest satisfies: $dis \left(i\right) = \sqrt{\frac{{\left({Mass}_{x}-{P}_{ix}\right)}^{2}}{{width}^{2}} + \frac{{\left({Mass}_{y}-{P}_{iy}\right)}^{2}}{{height}^{2}}}$ d(Pᵢₓ, P_{iy}) represents coordinates of the i^{th} point of interest.

For the composition rule of thirds, the reference position is four trisection lines. The electronic device may calculate distances from a center of mass position to the four trisection lines, and use a smallest distance among the four distances as a second distance parameter to represent a matching degree between the image and the composition rule of thirds. When the second distance parameter is smaller, the matching degree between the image and the composition rule of thirds is higher.

The second distance parameter satisfies the following expression: ${massDistance}_{ThirdLine} = {min}_{i = 1 , 2 , 3 , 4} \left\{d\left(mass, Li\right)\right\}$ *massDistance_{ThirdLine}* represents the second distance parameter, and d(mass, Li) represents a distance from the center of mass position to an i^{th} trisection line, where i=1, 2, 3, 4.

In an example in which the i^{th} trisection line is y=ki+bi, the distance from the center of mass position (Massₓ, Mass_{y}) to the i^{th} trisection line satisfies: $\frac{\left|ki∗{Mass}_{x}-{Mass}_{y}+bi\right|}{\sqrt{1 + {ki}^{2}}}$

For the diagonal composition rule, the reference position is two diagonal lines. The electronic device may calculate distances from a center of mass position to the two diagonal lines, and use a smaller distance in the two distances as a third distance parameter to represent a matching degree between the image and the diagonal composition rule. When the third distance parameter is smaller, the matching degree between the image and the diagonal composition rule is higher.

The third distance parameter satisfies the following expression: ${massDistance}_{DiagonaLine} = {min}_{i = 1 , 2} \left\{d\left(mass, Li\right)\right\}$ *massDistance_{DiagonaLine}* represents the third distance parameter, and d(mass, Li) represents a distance from the center of mass position to an i^{th} diagonal line, where i=1, 2.

For the center composition rule, the reference position is a center point of the image. The electronic device may calculate a distance from a center of mass position to the center point of the image, and use the distance as a fourth distance parameter to represent a matching degree between the image and the center composition rule. When the fourth distance parameter is smaller, it indicates that the matching degree between the image and the center composition rule is higher, and distribution of the person in the entire image is relatively even.

The fourth distance parameter satisfies: ${massDistance}_{Center} = \sqrt{\frac{{\left({Mass}_{x}-{C}_{x}\right)}^{2}}{{width}^{2}} + \frac{{\left({Mass}_{y}-{C}_{y}\right)}^{2}}{{height}^{2}}}$ *massDistance_{Center}* represents the fourth distance parameter, and (Cₓ, C_{y}) represents coordinates of the center point.

When N persons are included in an image, matching degrees between the image and different composition rules are related to an area proportion of each person and a distance from a center of mass position of the person to each marker point or guide line.

Specifically, for the golden triangle composition rule, the electronic device may calculate area proportions of the N persons and smallest distances from center of mass positions of the N persons to four points of interest, perform weighted averaging on the N smallest distances by using the area proportions of the persons as weights, and use an obtained result as a first distance parameter, to represent a matching degree between the image and the golden triangle composition rule. Specifically, the calculation formula can be as follows: ${S}_{P} = \frac{{\sum }_{j = 1}^{N} {w}_{j} ∗ {min}_{i ∈ 4} dis \left({P}_{j}, {P}_{i}^{P}\right)}{N} {=}_{P} = \frac{{\sum }_{j = 1}^{N} {w}_{j} ∗ {massDistance}_{AllPoint} \left(j\right)}{N}$

Sp represents the matching degree between the image and the golden triangle composition rule when the N persons are included in the image; wⱼ represents an area proportion of a j^{th} person, where j ∈ [1, N]; Pⱼ represents a center of mass position of the j^{th} person; Pᵢ^{P} represents an i^{th} point of interest, where i ∈ [1, 4]; and *massDistance_{AllPoint}*(*j*) represents a smallest distance from the center of mass position of the j^{th} person to the four points of interest.

For the composition rule of thirds, the electronic device may calculate area proportions of the N persons and smallest distances from center of mass positions of the N persons to four trisection lines, perform weighted averaging on the N smallest distances by using the area proportions of the persons as weights, and use an obtained result as a second distance parameter, to represent a matching degree between the image and the composition rule of thirds. Specifically, the calculation formula can be as follows: ${S}_{T} = \frac{{\sum }_{j = 1}^{N} {w}_{j} ∗ {min}_{i ∈ 4} dis \left({P}_{j}, {P}_{i}^{T}\right)}{N} = \frac{{\sum }_{j = 1}^{N} {w}_{j} ∗ {massDistance}_{ThirdLine} \left(j\right)}{N}$

S_{T} represents the matching degree between the image and the composition rule of thirds when the N persons are included in the image; wⱼ represents an area proportion of a j^{th} person, where j ∈ [1, N]; Pⱼ represents a center of mass position of the j^{th} person; Pᵢ^{T} represents an i^{th} trisection line, where i ∈ [1, 4]; and *massDistance_{ThirdLine}*(*j*) represents a smallest distance from the center of mass position of the j^{th} person to the four trisection lines.

For the diagonal composition rule, the electronic device may calculate area proportions of the N persons and smaller distances from center of mass positions of the N persons to two diagonal lines, perform weighted averaging on the N smaller distances by using the area proportions of the persons as weights, and use an obtained result as a third distance parameter, to represent a matching degree between the image and the diagonal composition rule. Specifically, the calculation formula can be as follows:
${S}_{D} = \frac{{\sum }_{j = 1}^{N} {w}_{j} ∗ {min}_{i ∈ 2} dis \left({P}_{j}, {P}_{i}^{D}\right)}{N} = \frac{{\sum }_{j = 1}^{N} {w}_{j} ∗ {massDistance}_{DiagonaLine} \left(j\right)}{N}$

S_{D} represents the matching degree between the image and the diagonal composition rule when the N persons are included in the image; wⱼ represents an area proportion of a j^{th} person, where j ∈ [1, N]; Pⱼ represents a center of mass position of the j^{th} person; Pᵢ^{D} represents an i^{th} diagonal line, where i ∈ [1, 2]; and *massDistance_{DiagonaLine}*(*j*) represents a smaller distance from the center of mass position of the j^{th} person to the two diagonal lines.

For the center composition rule, the electronic device may calculate area proportions of the N persons and distances from center of mass positions of the N persons to a center position, perform weighted averaging on the N distances by using the area proportions of the persons as weights, and use an obtained result as a fourth distance parameter, to represent a matching degree between the image and the center composition rule. Specifically, the calculation formula can be as follows: ${S}_{C} = \frac{{\sum }_{j = 1}^{N} {w}_{j} ∗ {min}_{i ∈ 4} dis \left({P}_{j}, {P}_{C}\right)}{N} = \frac{{\sum }_{j = 1}^{N} {w}_{j} ∗ {massDistance}_{Center} \left(j\right)}{N}$

S_{C} represents the matching degree between the image and the center composition rule when the N persons are included in the image; wⱼ represents an area proportion of a j^{th} person, where j ∈ [1, N]; Pⱼ represents a center of mass position of the j^{th} person; P_{C} represents a center point; and *massDistance_{Center}* (*j*) represents a distance from the center of mass position of the j^{th} person to the center point.

It can be understood that, when the distance parameter mentioned above (including the first distance parameter, second distance parameter, third distance parameter, and fourth distance parameter) is smaller, it indicates that the matching degree between the image and the composition rule is higher, that is, the composition quality of the image is higher.

It should be noted that, when the target person is the focal person, the electronic device may count a quantity of focal persons in the image, and when the quantity of focal persons is 1 or greater than 1, calculate the distance parameter using a manner different from the foregoing manners. This is not repeated herein again.

### 2. Social relationships in a multi-person scenario

When two or more target persons are included in an image, the electronic device may further evaluate a social relationship feature in the image. The social relationship feature may implicitly represent a relationship between the target persons in the image, such as whether the relationship between the persons is close, which may affect emotional preference of a viewer.

In an optional implementation, the electronic device may determine a closeness parameter of the image, and the closeness parameter indicates a closeness relationship between persons in a picture.

Specifically, the electronic device may determine a face position of each target person in the image and determine the closeness parameter of the image based on a plurality of face positions. The target person be every person in the image or a focal person in the image. The face position may be a position of a center point of a face box or a center of mass position of a person head. The center of mass position of the person head is average point coordinates of a top of head keypoint and a neck keypoint. For a specific calculation, refer to the foregoing descriptions. Details are not described herein again.

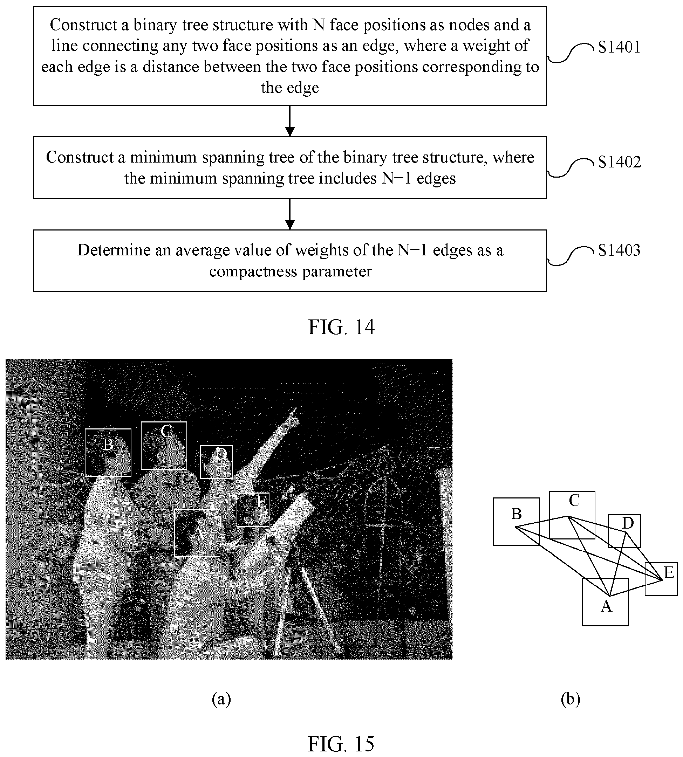

FIG. 14 shows a flowchart of an image capture method according to an embodiment of this application. FIG. 14 shows a process of determining a closeness parameter of an image by an electronic device in detail. As shown in FIG. 14, the image capture method according to an embodiment of this application includes the following.

S1401: Construct a binary tree structure with N face positions as nodes and a line connecting any two face positions as an edge, where a weight of each edge is a distance between the two face positions corresponding to the edge.

For example, the image shown in (a) in FIG. 15 includes five face boxes, and center points of the five face boxes are A, B, C, D, and E, respectively. The electronic device may use A, B, C, D, and E as nodes, and have connections AB, AC, AD, AE, BC, BD, BE, CD, CE, and DE. Then, the electronic device calculates a Euclidean distance between AB as a weight of an A-B edge, calculates a Euclidean distance between AC as a weight of an A-C edge, calculates a Euclidean distance between AD as a weight of an A-D edge, calculates a Euclidean distance between AE as a weight of an A-E edge, calculates a Euclidean distance between BC as a weight of a B-C edge, calculates a Euclidean distance between BD as a weight of a B-D edge, calculates a Euclidean distance between BE as a weight of a B-E edge, calculates a Euclidean distance between CD as a weight of a C-D edge, calculates a Euclidean distance between CE as a weight of a C-E edge, and calculates a Euclidean distance between DE as a weight of a D-E edge. A binary tree structure constructed based on A, B, C, D, and E may be shown in (b) in FIG. 15.

S1402: Construct a minimum spanning tree of the binary tree structure, where the minimum spanning tree includes N-1 edges.

The minimum spanning tree includes all nodes in the binary tree structure and includes a minimum quantity of edges that maintain graph connectivity.

The electronic device may construct the minimum spanning tree by using a Prim (Prim) algorithm or a Kruskal (Kruskal) algorithm. In the Kruskal (Kruskal) algorithm, all edges in a connected network (namely, the binary tree structure) are sorted in ascending order based on values of weights, selection starts from an edge with a smallest weight, and the edge may be selected to form the minimum spanning tree provided that the edge does not form a loop with a selected edge. For a connected network of N vertices, N-1 edges that meet a condition are selected, and a spanning tree formed by the edges is the minimum spanning tree.

For example, the electronic device sorts all edges in the binary tree structure shown in (b) in FIG. 15 in ascending order based on values of weights of the edges, to obtain Table 1:

**Table 1**

| B,C | C,D | D,E | E,A | D,A | ... |
|---|---|---|---|---|---|
| 3 | 3 | 4 | 4 | 6 | ... |

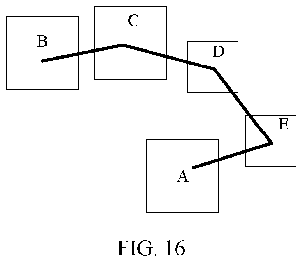

Smallest weights are the weight of the B-C edge and the weight of the C-D edge, both of which are 3. Assuming that the electronic device starts selection from B-C, because no edges have been selected to form the minimum spanning tree, and B-C does not form a loop by the B-C self, the B-C edge can form the minimum spanning tree; because the C-D edge does not form a loop with the selected B-C edge, the C-D edge can form the minimum spanning tree; because the D-E edge does not form a loop with the selected B-C edge and the selected C-D edge, the D-E edge can form the minimum spanning tree; because the E-A edge does not form a loop with the selected B-C edge, the selected C-D edge, and the selected D-E edge, the E-A edge can form the minimum spanning tree; and because the D-A edge may form a loop with the selected edge, the D-A edge cannot form the minimum spanning tree. In this way, the minimum spanning tree shown in FIG. 16 can be obtained.

In the Prim algorithm, for a connected network including N vertices, an operation of selecting an edge with a smallest weight from the connected network is repeated N-1 times, and a spanning tree formed by N-1 edges with smallest weights is referred to as the minimum spanning tree.

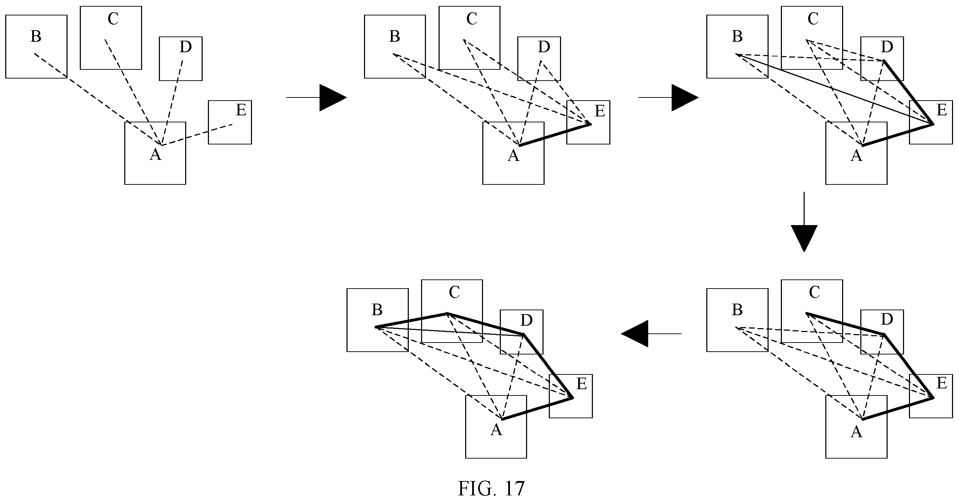

For example, as shown in FIG. 17, the electronic device first determines, from A-E, A-D, A-C, and A-B, an edge with a smallest weight, namely, A-E. Then, the electronic device determines, from E-D, E-C, and E-B, an edge with a smallest weight, namely E-D. Next, the electronic device determines, from D-C and D-B, an edge with a smallest weight, namely, D-C. Finally, the electronic device connects A-E, E-D, D-C, and C-B to form a minimum spanning tree.

S1403: Determine an average value of weights of the N-1 edges as a closeness parameter.

A specific calculation formula is as follows: ${Face}_{Closeness} = \frac{1}{N - 1} {\sum }_{i = 1}^{N - 1} {Length}_{i}$ *F*ace*_{Closeness}* represents the closeness parameter, and N represents a quantity of faces.

It can be understood that, when *F*ace*_{Closeness}* is smaller, distribution of faces in a picture is more compact, a relationship between persons is closer, richer emotions is included in the image, and therefore composition quality is higher.

### 3. Person position arrangement in the multi-person scenario

When three or more target persons are included in an image, the electronic device may determine a compactness parameter of the image based on center of mass positions of the target persons, to evaluate a position arrangement situation of the target persons in the image. Similarly, the target person may be every person in the image or a focal person in the image.

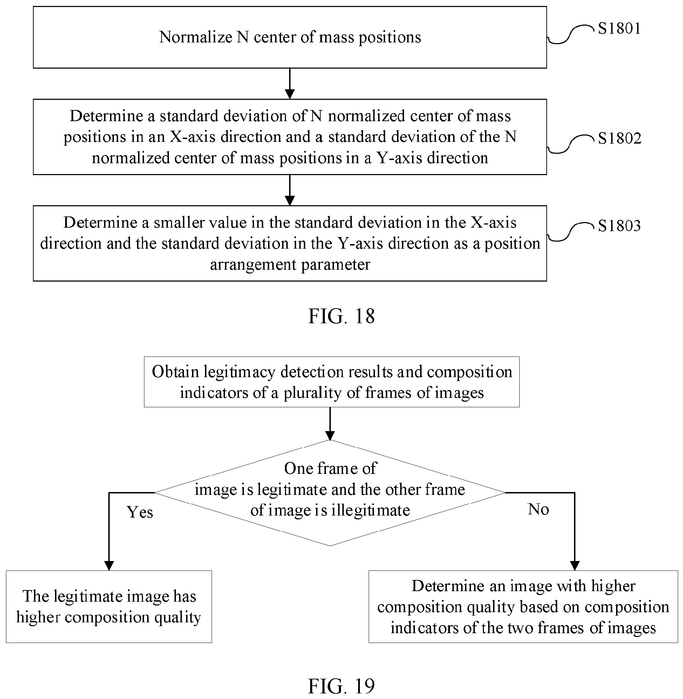

FIG. 18 shows a flowchart of an image capture method according to an embodiment of this application. FIG. 18 shows a process of determining a closeness parameter of an image by an electronic device in detail. As shown in FIG. 18, the image capture method according to an embodiment of this application includes the following.

S1801: Normalize N center of mass positions.

In the embodiments, to eliminate dimension impact, the electronic device may normalize center of mass positions of persons based on a length and a width of an image. A normalized center of mass position satisfies: ${MassPoint}_{trans} = \left\{\frac{MassPointX}{width}, \frac{MassPointY}{height}\right\}$

S1802: Determine a standard deviation of N normalized center of mass positions in an X-axis direction and a standard deviation of the N normalized center of mass positions in a Y-axis direction.

It can be understood that the standard deviation in the X-axis direction (referred to as a first direction) may indicate a person arrangement situation in the X-axis direction, and the standard deviation in the Y-axis direction (referred to as a second direction) may indicate a person arrangement situation in the Y-axis direction.

S1803: Determine a smaller value in the standard deviation in the X-axis direction and the standard deviation in the Y-axis direction as a compactness parameter.

In this way, the obtained compactness parameter may indicate a position arrangement situation of at least three persons in the image, and when the compactness parameter is smaller, position arrangement of the at least three persons is more proper, and composition quality of the image is higher.

After determining composition indicators of a plurality of frames of images, the electronic device may compare the composition indicators of the images to reserve one or more frames of images with higher composition quality.

Specifically, the electronic device may compare composition indicators of any two frames of images in the plurality of frames of images, remove a frame of image with lower composition quality from the any two frames of images, then continue to compare composition indicators of any two frames of images in a plurality of frames of images left after removing the frame of image with lower composition quality, until all the plurality of frames of images complete being compared, and finally determine the one or more frames of images with higher composition quality.

The following describes the comparison process in detail by using composition indicators of a first image and a second image as an example.

Composition parameters of the first image include a first distance parameter a, a second distance parameter a, a third distance parameter a, a fourth distance parameter a, a first closeness parameter, and a first compactness parameter. The first distance parameter a indicates a matching degree between the first image and a golden triangle composition rule, the second distance parameter a indicates a matching degree between the first image and a composition rule of thirds, the third distance parameter a indicates a matching degree between the first image and a diagonal composition rule, the fourth distance parameter a indicates a matching degree between the first image and a center composition rule, the first closeness parameter indicates a closeness degree between a plurality of persons in the first image, and the first compactness parameter indicates a properness degree in position arrangement between the plurality of persons in the first image.

Composition parameters of the second image include a first distance parameter b, a second distance parameter b, a third distance parameter b, a fourth distance parameter b, a second closeness parameter, and a second compactness parameter. The first distance parameter b indicates a matching degree between the second image and a golden triangle composition rule, the second distance parameter b indicates a matching degree between the second image and a composition rule of thirds, the third distance parameter b indicates a matching degree between the second image and a diagonal composition rule, the fourth distance parameter b indicates a matching degree between the second image and a center composition rule, the second closeness parameter indicates a closeness degree between a plurality of persons in the second image, and the second compactness parameter indicates a properness degree in position arrangement between the plurality of persons in the second image.

It should be noted that the electronic device may compare different composition parameters of the first image and second image when a total person quantity in the first image is different from a total person quantity in the second image.

When the total person quantities in both the first image and second image are 1, the electronic device compares only the distance parameters of the two images. Specifically, the electronic device may calculate a first difference between the first distance parameter a and the first distance parameter b. When the first difference is greater than a first threshold, if the first distance parameter a is smaller, composition quality of the first image is higher than composition quality of the second image; or if the first distance parameter b is smaller, composition quality of the second image is higher than composition quality of the first image.

The first difference is an absolute value of a difference between the first distance parameter a and the first distance parameter b. The first threshold is used to measure a closeness in value between the first distance parameter a and the first distance parameter b. When the first difference is less than or equal to the first threshold, it indicates that the first image and the second image may use a same composition rule, resulting in lower comparability. When the first difference is greater than the first threshold, it indicates that the first image and the second image do not use a same composition rule, and therefore comparison is performed.

When the first difference is less than or equal to the first threshold, the electronic device may calculate a second difference between the second distance parameter a and the second distance parameter b. When the second difference is greater than a second threshold, if the second distance parameter a is smaller, the composition quality of the first image is higher than the composition quality of the second image; or if the second distance parameter b is smaller, the composition quality of the second image is higher than the composition quality of the first image.

When the second difference is less than or equal to the second threshold, the electronic device may calculate a third difference between the third distance parameter a and the third distance parameter b. When the third difference is greater than a third threshold, if the third distance parameter a is smaller, the composition quality of the first image is higher than the composition quality of the second image; or if the third distance parameter b is smaller, the composition quality of the second image is higher than the composition quality of the first image.

When the third difference is less than or equal to the third threshold, the electronic device may calculate a fourth difference between the fourth distance parameter a and the fourth distance parameter b. When the fourth difference is greater than a fourth threshold, if the fourth distance parameter a is smaller, the composition quality of the first image is higher than the composition quality of the second image; or if the fourth distance parameter b is smaller, the composition quality of the second image is higher than the composition quality of the first image.

When the fourth difference is less than the fourth threshold, the electronic device cannot determine, based on the distance parameters of the two images, which image has a higher composition quality, but can further determine the image quality based on parameters such as definition and signal-to-noise ratio.

When a total person quantity in one image is 2 and a total person quantity in the other image is greater than 2, the electronic device may compare the composition quality of the two images based on the distance parameters and the closeness parameters of the two images.

Firstly, the electronic device may compare the distance parameters of the two images. For details, refer to the previous descriptions and details are not described herein again. If the electronic device cannot determine, based on the distance parameters of the two images, which image has a higher composition quality, the electronic device may further compare the closeness parameters of the two images.

Specifically, when the fourth difference is less than the fourth threshold, the electronic device may calculate a fifth difference between a first compactness degree and second compactness degree. When the fifth difference is greater than or equal to a fifth threshold, if the first compactness degree is smaller, the composition quality of the first image is higher than the composition quality of the second image; or if the second compactness degree is smaller, the composition quality of the second image is higher than the composition quality of the first image.

When the fifth difference is less than the fifth threshold, the electronic device may further determine the image quality based on parameters such as definition and signal-to-noise ratio.

When the total person quantities in the two images both are greater than 2, the electronic device may compare the composition quality of the two images based on the compactness parameters of the two images.

Specifically, the electronic device may calculate a sixth difference between the first compactness parameter and the second compactness parameter. When the sixth difference is greater than a sixth threshold, if the first compactness parameter is smaller, the composition quality of the first image is higher than the composition quality of the second image; or if the second compactness parameter is smaller, the composition quality of the second image is higher than the composition quality of the first image.

In an optional implementation, after obtaining a plurality of frames of images, the electronic device may reserve a valid image from the plurality of frames of images. For a process of determining a valid image, refer to the previous descriptions, and details are not described herein again.

In an optional implementation, after obtaining a plurality of frames of images, the electronic device may compare composition indicators of the plurality of frames of images, and finally store one or more frames of images with higher composition quality. For a process of comparing composition indicators of two frames of images, refer to the previous descriptions, and details are not described herein again.

In an optional implementation, as shown in FIG. 19, after obtaining a plurality of frames of images, the electronic device may first obtain validity detection results and composition indicators of the plurality of frames of images, and then compares the image frames pairwise. In two frames of images, if one frame of image is valid and the other frame of image is invalid, it can be determined that composition quality of the valid image is higher. If both frames of images are valid or invalid, an image with higher composition quality is determined based on composition indicators of the two frames of images. For a process of comparing composition indicators of two frames of images, refer to the previous descriptions, and details are not described herein again.

In an optional implementation, for each frame of image, the electronic device may recognize photographing statuses of all photographed objects in the image, evaluate composition quality of the image, and determine, based on the photographing statuses of all photographed objects and the composition quality of the image, an image that needs to be reserved from a plurality of frames of images.

In an optional implementation, for each frame of image, the electronic device may first recognize photographing statuses of all photographed objects in the image. The electronic device further evaluates the composition quality of the image only when all the photographing statuses of the photographed objects in the image are valid. In this way, for images in which photographing statuses of some or all of photographed objects are invalid, the electronic device does not need to evaluate composition quality of the images. This reduces amount of computation and further speeds up determining an image that needs to be reserved from a plurality of frames of images.

In conclusion, in this application, there is no need for presetting photography templates, but composition quality of images is evaluated from a plurality of dimensions after a plurality of frames of images are captured, and an image with good basic composition, close relationships between persons, and proper person arrangement is reserved. Images obtained in this way can avoid rigidity of the photography template, providing users free space to express themselves, and assisting the users in obtaining high-quality images.

An embodiment of this application further provides an electronic device. The electronic device may include a memory and one or more processors. The memory is coupled to the processor. The memory is configured to store computer program code. The computer program code includes computer instructions. When the processor executes the computer instructions, the electronic device may perform functions or steps performed by the mobile phone in the foregoing method embodiments.

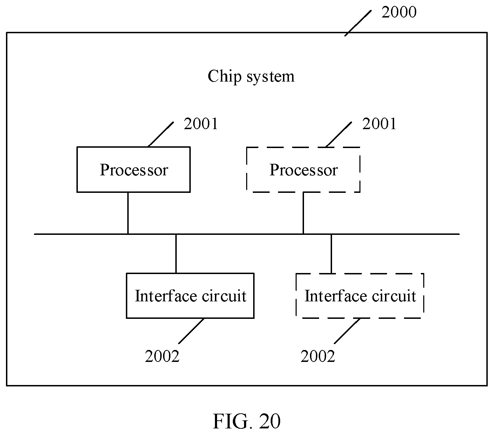

An embodiment of this application further provides a chip system. As shown in FIG. 20, the chip system 2000 includes at least one processor 2001 and at least one interface circuit 2002. The processor 2001 and the interface circuit 2002 may be interconnected through a line. For example, the interface circuit 2002 may be configured to receive a signal from another apparatus (for example, a memory of an electronic device). For another example, the interface circuit 2002 may be configured to send a signal to another apparatus (for example, the processor 2001). For example, the interface circuit 2002 may read instructions stored in the memory, and send the instructions to the processor 2001. When the instructions are executed by the processor 2001, the electronic device or a server is enabled to perform the steps in the foregoing embodiments. Certainly, the chip system may further include another discrete device. This is not specifically limited in embodiments of this application.

An embodiment further provides a computer-readable storage medium. The computer-readable storage medium stores computer instructions. When the computer instructions are executed on an electronic device, the electronic device or a server is enabled to perform the functions or steps in the foregoing method embodiments.

An embodiment of this application further provides a computer program product. When the computer program product runs on a computer, the computer is enabled to perform the functions or steps in the foregoing method embodiments.

In addition, an embodiment of this application further provides an apparatus. The apparatus may be a chip, a component, or a module. The apparatus may include a processor and a memory that are connected. The memory is configured to store computer-executable instructions, and when the apparatus runs, the processor may execute the computer-executable instructions stored in memory, so that the chip performs the functions or steps performed by the mobile phone in the foregoing method embodiments.

The electronic device, communication system, computer-readable storage medium, computer program product, or chip provided in embodiments are all used to execute the corresponding methods mentioned above. Therefore, for beneficial effects that can be achieved, refer to the beneficial effects in the corresponding methods mentioned above. Details are not described herein again.

Persons skilled in the art may clearly learn from the foregoing descriptions of the implementations that, for convenience and brevity of description, division into the foregoing functional modules is only used as an example for description. During actual application, the foregoing functions may be allocated to different functional modules for implementation based on a requirement, that is, an inner structure of an apparatus is divided into different functional modules, to complete all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be or may not be physically separate, and parts displayed as units may be one physical unit or a plurality of physical units, may be located in one position, or may be distributed on a plurality of locations. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the prior art, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Finally, it should be noted that the foregoing embodiments are merely intended for describing the technical solutions of this application, but not for limiting this application. Although this application is described in detail with reference to the foregoing embodiments, persons of ordinary skill in the art should understand that they may make modifications or equivalent replacements to the technical solutions of this application, without departing from the scope of the technical solutions of this application.

## Claims

1. An image capture method, applied to an electronic device, wherein the electronic device comprises a camera, and the method comprises:
displaying a plurality of frames of images captured by the camera in real time;
determining a composition indicator of each frame of image based on person information in the corresponding image, wherein the person information comprises a person quantity of target persons and one or more of a plurality of person parameters, the plurality of person parameters comprise a center of mass position of the target person, an area proportion of the target person, and a face position of the target person, the composition indicator comprises one or more of a plurality of composition parameters, the plurality of composition parameters comprise a distance parameter, a closeness parameter, and a compactness parameter, the distance parameter indicates a matching degree between the image and a preset composition rule, the closeness parameter indicates a closeness degree between at least two target persons in the image, and the compactness parameter indicates a dispersion degree of position arrangement between at least three target persons in the image; and
storing one or more frames of images with highest composition quality in the plurality of frames of images, wherein when the distance parameter, the closeness parameter, or the compactness parameter is smaller, the composition quality of the image is higher.,
**characterized in that**
the composition indicator comprises the distance parameter, and when the person quantity N is greater than or equal to 2, the person information comprises center of mass positions of the N target persons and area proportions of the N target persons; and the determining a composition indicator of each frame of image based on person information in the corresponding image comprises:
for each of the N target persons, obtaining a corresponding basic distance parameter based on a distance from a center of mass position of the target person to a preset reference position; and
performing weighted averaging on basic distance parameters corresponding to all target persons by using area proportions of the target persons as weights, to obtain the distance parameter.

2. The method according to claim 1, wherein the preset reference position comprises a plurality of reference positions; and the obtaining a corresponding basic distance parameter based on a distance from a center of mass position of the target person to a preset reference position comprises:
using a smallest distance among distances from the center of mass position of the target person to the plurality of reference positions as the corresponding basic distance parameter;
or
the preset reference position comprises one reference position; and the obtaining a corresponding basic distance parameter based on a distance from a center of mass position of the target person to a preset reference position comprises:
using a distance from the center of mass position target person to the one reference position as the corresponding basic distance parameter.

3. The method according to claim 1, wherein the preset reference position comprises: four points of interest of the image, two diagonal lines of the image, four trisection lines of the image, or a center point of the image.

4. The method according to any one of claims 1 to 3, wherein when the person quantity N is greater than or equal to 2, the composition indicator comprises the closeness parameter, the person information comprises face positions of the N target persons, and the determining a composition indicator of each frame of image based on person information in the corresponding image comprises:
constructing a binary tree structure with N face positions as nodes and a line connecting any two face positions as an edge, wherein a weight of each edge is a distance between the two face positions corresponding to the edge;
constructing a minimum spanning tree of the binary tree structure, wherein the minimum spanning tree comprises N-1 edges; and
determining an average value of weights of the N-1 edges as the closeness parameter.

5. The method according to claim 4, wherein when the person quantity N is greater than or equal to 3, the composition indicator further comprises the compactness parameter, the person information further comprises center of mass positions of the N target persons, and the determining a composition indicator of each frame of image based on person information in the corresponding image further comprises:
separately determining a standard deviation of the N center of mass positions in a first direction and a standard deviation of the N center of mass positions in a second direction; and
determining a smaller value in the standard deviation in the first direction and the standard deviation in the second direction as the compactness parameter.

6. The method according to any one of claims 1 to 5, wherein the method further comprises:
comparing composition indicators of any two frames of images in the plurality of frames of images, and removing a frame of image with lower composition quality in the two frames of images; and
continuing comparing composition indicators of any two frames of images in a plurality of frames of images left after removing the frame of image with lower composition quality, until all the plurality of frames of images complete being compared.

7. The method according to any one of claims 1 to 3 and according to claim 6, wherein when person quantities in the any two frames of images are both 1, the composition indicator comprises the distance parameter, the distance parameter comprises a first distance parameter, a second distance parameter, a third distance parameter, and a fourth distance parameter, the first distance parameter indicates a matching degree between the image and a first composition rule, the second distance parameter indicates a matching degree between the image and a second composition rule, the third distance parameter indicates a matching degree between the image and a third composition rule, the fourth distance parameter indicates a matching degree between the image and a fourth composition rule, and the first composition rule, the second composition rule, the third composition rule, and the fourth composition rule comprise different preset reference positions;
the comparing composition indicators of any two frames of images in the plurality of frames of images comprises:
when a difference between first distance parameters of the any two frames of images is greater than or equal to a first threshold, comparing the first distance parameters of the any two frames of images, wherein an image with a smaller first distance parameter has a higher composition quality; or
when a difference between first distance parameters of the any two frames of images is less than a first threshold, determining whether a difference between second distance parameters of the any two frames of images is greater than or equal to a second threshold; and
when the difference between the second distance parameters of the any two frames of images is greater than or equal to the second threshold, comparing the second distance parameters of the any two frames of images, wherein an image with a smaller second distance parameter has a higher composition quality; or
when the difference between the second distance parameters of the any two frames of images is less than the second threshold, determining whether a difference between third distance parameters of the any two frames of images is greater than or equal to a third threshold; and
when the difference between the third distance parameters of the any two frames of images is greater than or equal to the third threshold, comparing the third distance parameters of the any two frames of images, wherein an image with a smaller third distance parameter has a higher composition quality; or
when the difference between the third distance parameters of the any two frames of images is less than the third threshold, determining whether a difference between fourth distance parameters of the any two frames of images is greater than or equal to a fourth threshold; and
when the difference between the fourth distance parameters of the any two frames of images is greater than or equal to the fourth threshold, comparing the fourth distance parameters of the any two frames of images, wherein an image with a smaller fourth distance parameter has a higher composition quality.

8. The method according to claim 7, wherein if a person quantity N in one of the any two frames of images is equal to 2 and a person quantity N in the other frame of image is greater than or equal to 2, the composition indicator further comprises the closeness parameter, and the comparing composition indicators of any two frames of images in the plurality of frames of images further comprises:
when a difference between fourth distance parameters of the any two frames of images is less than a fourth threshold, determining whether a difference between closeness parameters of the any two frames of images is greater than or equal to a fifth threshold; and
when the difference between the closeness parameters of the any two frames of images is greater than or equal to the fifth threshold, comparing the closeness parameters of the any two frames of images, wherein an image with a smaller closeness parameter has a higher composition quality.

9. The method according to claim 6 to 8, wherein if person quantities in the any two frames of images are both greater than or equal to 2, the composition indicator further comprises the compactness parameter, and the comparing composition indicators of any two frames of images in the plurality of frames of images comprises:
when a difference between compactness parameters of the any two frames of images is greater than or equal to a sixth threshold, comparing the compactness parameters of the any two frames of images, wherein an image with a smaller compactness parameter has a higher composition quality.

10. The method according to any one of claims 1 to 9, wherein the target person is every person in the image, or the target person is a person whose area proportion in the image is greater than a preset threshold and whose center of mass position is within a preset region.

11. The method according to any one of claims 1 to 10, wherein the method further comprises:
performing human body detection, face detection, and keypoint detection on the plurality of frames of images to obtain human body detection results, face detection results, and keypoint detection results; and
determining photographing statuses of all persons in the plurality of frames of images based on the human body detection results, the face detection results, and the keypoint detection results, wherein the photographing status comprises a motion status of a person and one or more of the following statuses: a center of mass position of the person, a portrait type, and an area proportion of the person; and
the storing one or more frames of images with highest composition quality in the plurality of frames of images comprises:
storing one or more valid frames of images with highest composition quality in the plurality of frames of images, wherein the valid image is an image in which photographing statuses of all persons are valid.

12. The method according to claim 11, wherein if the keypoint detection result comprises only a top of head keypoint and a neck keypoint, the portrait type is a facial close-up, and the center of mass position of the person is an average coordinate point of the top of head keypoint and the neck keypoint.

## Patentansprüche

1. Ein Bildaufnahmeverfahren, angewendet auf ein elektronisches Gerät, wobei das elektronische Gerät eine Kamera umfasst und das Verfahren umfasst:
Echtzeit-Anzeige einer Vielzahl von durch die Kamera aufgenommenen Einzelbildern;
Bestimmung eines Kompositionsindikators für jedes Einzelbild basierend auf Personeninformationen im entsprechenden Bild, wobei die Personeninformationen eine Personenanzahl von Zielpersonen und einen oder mehrere einer Vielzahl von Personenparametern umfassen, wobei die Vielzahl von Personenparametern eine Schwerpunktposition der Zielperson, einen Flächenanteil der Zielperson und eine Gesichtsposition der Zielperson umfasst, wobei der Kompositionsindikator einen oder mehrere einer Vielzahl von Kompositionsparametern umfasst, wobei die Vielzahl von Kompositionsparametern einen Abstandsparameter, einen Näheparameter und einen Kompaktheitsparameter umfasst, wobei der Abstandsparameter einen Übereinstimmungsgrad zwischen dem Bild und einer voreingestellten Kompositionsregel angibt, der Näheparameter einen Nähegrad zwischen mindestens zwei Zielpersonen im Bild angibt und der Kompaktheitsparameter einen Dispersionsgrad der Positionsanordnung zwischen mindestens drei Zielpersonen im Bild angibt; und
Speichern eines oder mehrerer Einzelbilder mit der höchsten Kompositionsqualität aus der Vielzahl von Einzelbildern, wobei die Kompositionsqualität des Bildes höher ist, wenn der Abstandsparameter, der Näheparameter oder der Kompaktheitsparameter kleiner ist,
**dadurch gekennzeichnet, dass** der Kompositionsindikator den Abstandsparameter umfasst und, wenn die Personenanzahl N größer oder gleich 2 ist, die Personeninformationen Schwerpunktpositionen der N Zielpersonen und Flächenanteile der N Zielpersonen umfassen; und das Bestimmen eines Kompositionsindikators für jedes Einzelbild basierend auf Personeninformationen im entsprechenden Bild Folgendes umfasst:
für jede der N Zielpersonen, Ermitteln eines entsprechenden grundlegenden Abstandsparameters basierend auf einem Abstand von einer Schwerpunktposition der Zielperson zu einer voreingestellten Referenzposition; und
Durchführen einer gewichteten Mittelung der grundlegenden Abstandsparameter, die allen Zielpersonen entsprechen, unter Verwendung der Flächenanteile der Zielpersonen als Gewichte, um den Abstandsparameter zu erhalten.

2. Das Verfahren nach Anspruch 1, wobei die voreingestellte Referenzposition eine Vielzahl von Referenzpositionen umfasst; und das Ermitteln eines entsprechenden grundlegenden Abstandsparameters basierend auf einem Abstand von einer Schwerpunktposition der Zielperson zu einer voreingestellten Referenzposition Folgendes umfasst:
Verwenden eines kleinsten Abstands unter den Abständen von der Schwerpunktposition der Zielperson zu der Vielzahl von Referenzpositionen als den entsprechenden grundlegenden Abstandsparameter;
oder
die voreingestellte Referenzposition eine Referenzposition umfasst; und das Ermitteln eines entsprechenden grundlegenden Abstandsparameters basierend auf einem Abstand von einer Schwerpunktposition der Zielperson zu einer voreingestellten Referenzposition umfasst:
Verwenden eines Abstands von der Schwerpunktposition der Zielperson zu der einen Referenzposition als den entsprechenden grundlegenden Abstandsparameter.

3. Verfahren nach Anspruch 1, wobei die voreingestellte Referenzposition umfasst: vier Interessenpunkte des Bildes, zwei Diagonalen des Bildes, vier Drittellinien des Bildes oder einen Mittelpunkt des Bildes.

4. Verfahren nach einem der Ansprüche 1 bis 3, wobei, wenn die Personenanzahl N größer oder gleich 2 ist, der Kompositionsindikator den Näheparameter umfasst, die Personeninformationen Gesichtspositionen der N Zielpersonen umfassen und das Bestimmen eines Kompositionsindikators jedes Einzelbildes basierend auf Personeninformationen in dem entsprechenden Bild umfasst:
Konstruieren einer Binärbaumstruktur mit N Gesichtspositionen als Knoten und einer Linie, die beliebige zwei Gesichtspositionen verbindet, als eine Kante, wobei ein Gewicht jeder Kante ein Abstand zwischen den zwei Gesichtspositionen ist, die der Kante entsprechen;
Konstruieren eines minimalen Spannbaums der Binärbaumstruktur, wobei der minimale Spannbaum N-1 Kanten umfasst; und
Bestimmen eines Durchschnittswerts der Gewichte der N-1 Kanten als den Näheparameter.

5. Verfahren nach Anspruch 4, wobei, wenn die Personenanzahl N größer oder gleich 3 ist, der Kompositionsindikator ferner den Kompaktheitsparameter umfasst, die Personeninformationen ferner Schwerpunktpositionen der N Zielpersonen umfassen und das Bestimmen eines Kompositionsindikators jedes Einzelbildes basierend auf Personeninformationen in dem entsprechenden Bild ferner umfasst:
separates Bestimmen einer Standardabweichung der N Schwerpunktpositionen in einer ersten Richtung und einer Standardabweichung der N Schwerpunktpositionen in einer zweiten Richtung; und
Bestimmen eines kleineren Werts der Standardabweichung in der ersten Richtung und der Standardabweichung in der zweiten Richtung als den Kompaktheitsparameter.

6. Verfahren nach einem der Ansprüche 1 bis 5, wobei das Verfahren ferner umfasst:
Vergleichen von Kompositionsindikatoren beliebiger zwei Einzelbilder in der Vielzahl von Einzelbildern und Entfernen eines Einzelbildes mit geringerer Kompositionsqualität aus den zwei Einzelbildern; und
Fortsetzen des Vergleichens von Kompositionsindikatoren beliebiger zwei Einzelbilder in einer Vielzahl von Einzelbildern, die nach dem Entfernen des Einzelbildes mit geringerer Kompositionsqualität verbleiben, bis alle der Vielzahl von Einzelbildern vollständig verglichen sind.

7. Verfahren nach einem der Ansprüche 1 bis 3 und nach Anspruch 6, wobei, wenn die Personenanzahl in den beiden beliebigen Einzelbildern jeweils 1 beträgt, der Kompositionsindikator den Abstandsparameter umfasst, wobei der Abstandsparameter einen ersten Abstandsparameter, einen zweiten Abstandsparameter, einen dritten Abstandsparameter und einen vierten Abstandsparameter umfasst, wobei der erste Abstandsparameter einen Übereinstimmungsgrad zwischen dem Bild und einer ersten Kompositionsregel angibt, der zweite Abstandsparameter einen Übereinstimmungsgrad zwischen dem Bild und einer zweiten Kompositionsregel angibt, der dritte Abstandsparameter einen Übereinstimmungsgrad zwischen dem Bild und einer dritten Kompositionsregel angibt, der vierte Abstandsparameter einen Übereinstimmungsgrad zwischen dem Bild und einer vierten Kompositionsregel angibt und wobei die erste Kompositionsregel, die zweite Kompositionsregel, die dritte Kompositionsregel und die vierte Kompositionsregel unterschiedliche voreingestellte Referenzpositionen umfassen;
wobei das Vergleichen der Kompositionsindikatoren beliebiger zwei Einzelbilder aus der Vielzahl von Einzelbildern umfasst:
wenn eine Differenz zwischen den ersten Abstandsparametern der beliebigen zwei Einzelbilder größer oder gleich einem ersten Schwellenwert ist, Vergleichen der ersten Abstandsparameter der beliebigen zwei Einzelbilder, wobei ein Bild mit einem kleineren ersten Abstandsparameter eine höhere Kompositionsqualität aufweist; oder
wenn eine Differenz zwischen den ersten Abstandsparametern der beliebigen zwei Einzelbilder kleiner als ein erster Schwellenwert ist, Bestimmen, ob eine Differenz zwischen den zweiten Abstandsparametern der beliebigen zwei Einzelbilder größer oder gleich einem zweiten Schwellenwert ist; und
wenn die Differenz zwischen den zweiten Abstandsparametern der beliebigen zwei Einzelbilder größer oder gleich dem zweiten Schwellenwert ist, Vergleichen der zweiten Abstandsparameter der beliebigen zwei Einzelbilder, wobei ein Bild mit einem kleineren zweiten Abstandsparameter eine höhere Kompositionsqualität aufweist; oder
wenn die Differenz zwischen den zweiten Abstandsparametern der beliebigen zwei Einzelbilder kleiner als der zweite Schwellenwert ist, Bestimmen, ob eine Differenz zwischen den dritten Abstandsparametern der beliebigen zwei Einzelbilder größer oder gleich einem dritten Schwellenwert ist; und
wenn die Differenz zwischen den dritten Abstandsparametern der beliebigen zwei Einzelbilder größer oder gleich dem dritten Schwellenwert ist, Vergleichen der dritten Abstandsparameter der beliebigen zwei Einzelbilder, wobei ein Bild mit einem kleineren dritten Abstandsparameter eine höhere Kompositionsqualität aufweist; oder
wenn die Differenz zwischen den dritten Distanzparametern beliebiger zwei Einzelbilder kleiner als der dritte Schwellenwert ist, Bestimmen, ob eine Differenz zwischen vierten Distanzparametern beliebiger zwei Einzelbilder größer oder gleich einem vierten Schwellenwert ist; und
wenn die Differenz zwischen den vierten Distanzparametern beliebiger zwei Einzelbilder größer oder gleich dem vierten Schwellenwert ist, Vergleichen der vierten Distanzparameter beliebiger zwei Einzelbilder, wobei ein Bild mit einem kleineren vierten Distanzparameter eine höhere Kompositionsqualität aufweist.

8. Verfahren nach Anspruch 7, wobei, wenn eine Personenanzahl N in einem der beliebigen zwei Einzelbilder gleich 2 ist und eine Personenanzahl N im anderen Einzelbild größer oder gleich 2 ist, der Kompositionsindikator ferner den Näheparameter umfasst und das Vergleichen der Kompositionsindikatoren beliebiger zwei Einzelbilder in der Vielzahl von Einzelbildern ferner umfasst:
wenn eine Differenz zwischen vierten Distanzparametern beliebiger zwei Einzelbilder kleiner als ein vierter Schwellenwert ist, Bestimmen, ob eine Differenz zwischen Näheparametern beliebiger zwei Einzelbilder größer oder gleich einem fünften Schwellenwert ist; und
wenn die Differenz zwischen den Näheparametern beliebiger zwei Einzelbilder größer oder gleich dem fünften Schwellenwert ist, Vergleichen der Näheparameter beliebiger zwei Einzelbilder, wobei ein Bild mit einem kleineren Näheparameter eine höhere Kompositionsqualität aufweist.

9. Verfahren nach Anspruch 6 bis 8, wobei, wenn die Personenanzahlen in den beliebigen zwei Einzelbildern beide größer oder gleich 2 sind, der Kompositionsindikator ferner den Kompaktheitsparameter umfasst und das Vergleichen der Kompositionsindikatoren beliebiger zwei Einzelbilder in der Vielzahl von Einzelbildern umfasst:
wenn eine Differenz zwischen Kompaktheitsparametern beliebiger zwei Einzelbilder größer oder gleich einem sechsten Schwellenwert ist, Vergleichen der Kompaktheitsparameter beliebiger zwei Einzelbilder, wobei ein Bild mit einem kleineren Kompaktheitsparameter eine höhere Kompositionsqualität aufweist.

10. Verfahren nach einem der Ansprüche 1 bis 9, wobei die Zielperson jede Person im Bild ist oder die Zielperson eine Person ist, deren Flächenanteil im Bild größer als ein voreingestellter Schwellenwert ist und deren Schwerpunktposition innerhalb eines voreingestellten Bereichs liegt.

11. Verfahren nach einem der Ansprüche 1 bis 10, wobei das Verfahren ferner umfasst:
Durchführen einer Körpererkennung, Gesichtserkennung und Schlüsselpunkterkennung an der Vielzahl von Einzelbildern, um Körpererkennungsergebnisse, Gesichtserkennungsergebnisse und Schlüsselpunkterkennungsergebnisse zu erhalten; und
Bestimmen von Aufnahmestatus aller Personen in der Vielzahl von Einzelbildern basierend auf den Ergebnissen der Körpererkennung, der Gesichtserkennung und der Erkennung von Schlüsselpunkten, wobei der Aufnahmestatus einen Bewegungsstatus einer Person und einen oder mehrere der folgenden Status umfasst: eine Position des Massenschwerpunkts der Person, einen Porträttyp und ein Flächenverhältnis der Person; und
das Speichern eines oder mehrerer Einzelbilder mit der höchsten Kompositionsqualität aus der Vielzahl von Einzelbildern umfasst:
Speichern eines oder mehrerer gültiger Einzelbilder mit der höchsten Kompositionsqualität aus der Vielzahl von Einzelbildern, wobei das gültige Bild ein Bild ist, in dem die Aufnahmestatus aller Personen gültig sind.

12. Das Verfahren nach Anspruch 11, wobei, falls das Ergebnis der Schlüsselpunkterkennung nur einen Schlüsselpunkt für die Kopfoberseite und einen Schlüsselpunkt für den Hals umfasst, der Porträttyp eine Gesichtsnahaufnahme ist und die Position des Massenschwerpunkts der Person ein durchschnittlicher Koordinatenpunkt des Schlüsselpunkts für die Kopfoberseite und des Schlüsselpunkts für den Hals ist.

## Revendications

1. Procédé de capture d'image, appliqué à un dispositif électronique, dans lequel le dispositif électronique comprend une caméra, et le procédé comprend :
afficher en temps réel une pluralité de trames d'images capturées par la caméra ;
déterminer un indicateur de composition de chaque trame d'image sur la base d'informations de personne dans l'image correspondante, dans lequel les informations de personne comprennent une quantité de personnes cibles et un ou plusieurs paramètres parmi une pluralité de paramètres de personne, la pluralité de paramètres de personne comprenant une position du centre de masse de la personne cible, une proportion de surface de la personne cible et une position du visage de la personne cible, l'indicateur de composition comprenant un ou plusieurs paramètres parmi une pluralité de paramètres de composition, la pluralité de paramètres de composition comprenant un paramètre de distance, un paramètre de proximité et un paramètre de compacité, le paramètre de distance indiquant un degré de correspondance entre l'image et une règle de composition prédéfinie, le paramètre de proximité indiquant un degré de proximité entre au moins deux personnes cibles dans l'image, et le paramètre de compacité indiquant un degré de dispersion de la disposition des positions entre au moins trois personnes cibles dans l'image ; et
stocker une ou plusieurs trames d'images ayant la meilleure qualité de composition parmi la pluralité de trames d'images, dans lequel lorsque le paramètre de distance, le paramètre de proximité ou le paramètre de compacité est plus petit, la qualité de composition de l'image est plus élevée,
**caractérisé en ce que** l'indicateur de composition comprend le paramètre de distance, et lorsque la quantité de personnes N est supérieure ou égale à 2, les informations de personne comprennent les positions des centres de masse des N personnes cibles et les proportions de surface des N personnes cibles ; et la détermination d'un indicateur de composition de chaque trame d'image sur la base des informations de personne dans l'image correspondante comprend les étapes consistant à :
pour chacune des N personnes cibles, obtenir un paramètre de distance de base correspondant sur la base d'une distance entre une position du centre de masse de la personne cible et une position de référence prédéfinie ; et
effectuer une moyenne pondérée sur les paramètres de distance de base correspondant à toutes les personnes cibles en utilisant les proportions de surface des personnes cibles comme poids, pour obtenir le paramètre de distance.

2. Procédé selon la revendication 1, dans lequel la position de référence prédéfinie comprend une pluralité de positions de référence ; et l'obtention d'un paramètre de distance de base correspondant sur la base d'une distance entre une position du centre de masse de la personne cible et une position de référence prédéfinie comprend les étapes consistant à :
utiliser la plus petite distance parmi les distances entre la position du centre de masse de la personne cible et la pluralité de positions de référence comme paramètre de distance de base correspondant ;
ou
la position de référence prédéfinie comprend une position de référence ; et l'obtention d'un paramètre de distance de base correspondant sur la base d'une distance entre une position de centre de masse de la personne cible et une position de référence prédéfinie comprend :
l'utilisation d'une distance entre la position du centre de masse de la personne cible et ladite position de référence en tant que paramètre de distance de base correspondant.

3. Procédé selon la revendication 1, dans lequel la position de référence prédéfinie comprend : quatre points d'intérêt de l'image, deux lignes diagonales de l'image, quatre lignes de tiers de l'image, ou un point central de l'image.

4. Procédé selon l'une quelconque des revendications 1 à 3, dans lequel lorsque la quantité de personnes N est supérieure ou égale à 2, l'indicateur de composition comprend le paramètre de proximité, les informations sur les personnes comprennent les positions des visages des N personnes cibles, et la détermination d'un indicateur de composition de chaque trame d'image sur la base des informations sur les personnes dans l'image correspondante comprend :
la construction d'une structure d'arbre binaire avec N positions de visage en tant que nœuds et une ligne reliant deux positions de visage quelconques en tant qu'arête, dans laquelle un poids de chaque arête est une distance entre les deux positions de visage correspondant à l'arête ;
la construction d'un arbre couvrant minimal de la structure d'arbre binaire, dans laquelle l'arbre couvrant minimal comprend N-1 arêtes ; et
la détermination d'une valeur moyenne des poids des N-1 arêtes en tant que paramètre de proximité.

5. Procédé selon la revendication 4, dans lequel lorsque la quantité de personnes N est supérieure ou égale à 3, l'indicateur de composition comprend en outre le paramètre de compacité, les informations sur les personnes comprennent en outre les positions des centres de masse des N personnes cibles, et la détermination d'un indicateur de composition de chaque trame d'image sur la base des informations sur les personnes dans l'image correspondante comprend en outre :
la détermination séparée d'un écart-type des N positions de centres de masse dans une première direction et d'un écart-type des N positions de centres de masse dans une seconde direction ; et
la détermination d'une valeur plus petite parmi l'écart-type dans la première direction et l'écart-type dans la seconde direction en tant que paramètre de compacité.

6. Procédé selon l'une quelconque des revendications 1 à 5, dans lequel le procédé comprend en outre :
la comparaison des indicateurs de composition de deux trames d'images quelconques parmi la pluralité de trames d'images, et la suppression d'une trame d'image ayant une qualité de composition inférieure parmi les deux trames d'images ; et
poursuivre la comparaison des indicateurs de composition de deux trames d'images quelconques dans une pluralité de trames d'images restantes après avoir supprimé la trame d'image avec une qualité de composition inférieure, jusqu'à ce que toutes la pluralité de trames d'images aient fini d'être comparées.

7. Procédé selon l'une quelconque des revendications 1 à 3 et selon la revendication 6, dans lequel, lorsque les quantités de personnes dans deux trames d'images quelconques sont toutes deux égales à 1, l'indicateur de composition comprend le paramètre de distance, le paramètre de distance comprend un premier paramètre de distance, un deuxième paramètre de distance, un troisième paramètre de distance et un quatrième paramètre de distance, le premier paramètre de distance indique un degré de correspondance entre l'image et une première règle de composition, le deuxième paramètre de distance indique un degré de correspondance entre l'image et une deuxième règle de composition, le troisième paramètre de distance indique un degré de correspondance entre l'image et une troisième règle de composition, le quatrième paramètre de distance indique un degré de correspondance entre l'image et une quatrième règle de composition, et la première règle de composition, la deuxième règle de composition, la troisième règle de composition et la quatrième règle de composition comprennent des positions de référence prédéfinies différentes ;
la comparaison des indicateurs de composition de deux trames d'images quelconques parmi la pluralité de trames d'images comprend :
lorsqu'une différence entre les premiers paramètres de distance des deux trames d'images quelconques est supérieure ou égale à un premier seuil, comparer les premiers paramètres de distance des deux trames d'images quelconques, dans lequel une image avec un premier paramètre de distance plus petit a une qualité de composition plus élevée ; ou
lorsqu'une différence entre les premiers paramètres de distance des deux trames d'images quelconques est inférieure à un premier seuil, déterminer si une différence entre les deuxièmes paramètres de distance des deux trames d'images quelconques est supérieure ou égale à un deuxième seuil ; et
lorsque la différence entre les deuxièmes paramètres de distance des deux trames d'images quelconques est supérieure ou égale au deuxième seuil, comparer les deuxièmes paramètres de distance des deux trames d'images quelconques, dans lequel une image avec un deuxième paramètre de distance plus petit a une qualité de composition plus élevée ; ou
lorsque la différence entre les deuxièmes paramètres de distance des deux trames d'images quelconques est inférieure au deuxième seuil, déterminer si une différence entre les troisièmes paramètres de distance des deux trames d'images quelconques est supérieure ou égale à un troisième seuil ; et
lorsque la différence entre les troisièmes paramètres de distance des deux trames d'images quelconques est supérieure ou égale au troisième seuil, comparer les troisièmes paramètres de distance des deux trames d'images quelconques, dans lequel une image avec un troisième paramètre de distance plus petit a une qualité de composition plus élevée ; ou
lorsque la différence entre les troisièmes paramètres de distance de deux trames d'images quelconques est inférieure au troisième seuil, déterminer si une différence entre les quatrièmes paramètres de distance de deux trames d'images quelconques est supérieure ou égale à un quatrième seuil ; et
lorsque la différence entre les quatrièmes paramètres de distance de deux trames d'images quelconques est supérieure ou égale au quatrième seuil, comparer les quatrièmes paramètres de distance de deux trames d'images quelconques, dans lequel une image avec un quatrième paramètre de distance plus petit a une meilleure qualité de composition.

8. Procédé selon la revendication 7, dans lequel si une quantité de personnes N dans l'une des deux trames d'images quelconques est égale à 2 et qu'une quantité de personnes N dans l'autre trame d'image est supérieure ou égale à 2, l'indicateur de composition comprend en outre le paramètre de proximité, et la comparaison des indicateurs de composition de deux trames d'images quelconques parmi la pluralité de trames d'images comprend en outre :
lorsqu'une différence entre les quatrièmes paramètres de distance de deux trames d'images quelconques est inférieure à un quatrième seuil, déterminer si une différence entre les paramètres de proximité de deux trames d'images quelconques est supérieure ou égale à un cinquième seuil ; et
lorsque la différence entre les paramètres de proximité de deux trames d'images quelconques est supérieure ou égale au cinquième seuil, comparer les paramètres de proximité de deux trames d'images quelconques, dans lequel une image avec un paramètre de proximité plus petit a une meilleure qualité de composition.

9. Procédé selon les revendications 6 à 8, dans lequel si les quantités de personnes dans deux trames d'images quelconques sont toutes deux supérieures ou égales à 2, l'indicateur de composition comprend en outre le paramètre de compacité, et la comparaison des indicateurs de composition de deux trames d'images quelconques parmi la pluralité de trames d'images comprend :
lorsqu'une différence entre les paramètres de compacité de deux trames d'images quelconques est supérieure ou égale à un sixième seuil, comparer les paramètres de compacité de deux trames d'images quelconques, dans lequel une image avec un paramètre de compacité plus petit a une meilleure qualité de composition.

10. Procédé selon l'une quelconque des revendications 1 à 9, dans lequel la personne cible est chaque personne dans l'image, ou la personne cible est une personne dont la proportion de surface dans l'image est supérieure à un seuil prédéfini et dont la position du centre de masse se trouve dans une région prédéfinie.

11. Procédé selon l'une quelconque des revendications 1 à 10, dans lequel le procédé comprend en outre :
effectuer une détection de corps humain, une détection de visage et une détection de points clés sur la pluralité de trames d'images pour obtenir des résultats de détection de corps humain, des résultats de détection de visage et des résultats de détection de points clés ; et
déterminer des statuts de prise de vue de toutes les personnes dans la pluralité de trames d'images en fonction des résultats de détection du corps humain, des résultats de détection des visages et des résultats de détection des points clés, dans lequel le statut de prise de vue comprend un statut de mouvement d'une personne et un ou plusieurs des statuts suivants : une position du centre de masse de la personne, un type de portrait et une proportion de surface de la personne ; et
le stockage d'une ou plusieurs trames d'images avec la qualité de composition la plus élevée dans la pluralité de trames d'images comprend :
stocker une ou plusieurs trames d'images valides avec la qualité de composition la plus élevée dans la pluralité de trames d'images, dans lequel l'image valide est une image dans laquelle les statuts de prise de vue de toutes les personnes sont valides.

12. Procédé selon la revendication 11, dans lequel si le résultat de détection de points clés comprend uniquement un point clé du sommet de la tête et un point clé du cou, le type de portrait est un gros plan facial, et la position du centre de masse de la personne est un point de coordonnées moyen du point clé du sommet de la tête et du point clé du cou.
